(19) Europäisches Patentamt / European Patent Office / Office européen des brevets

(11) **EP 2 286 259 B1**

(12) **EUROPÄISCHE PATENTSCHRIFT**

(45) Veröffentlichungstag und Bekanntmachung des Hinweises auf die Patenterteilung:
**28.12.2011 Patentblatt 2011/52**

(51) Int Cl.:
**G01S 19/37** *(2010.01)*        **G01S 19/13** *(2010.01)*
**G01S 19/32** *(2010.01)*

(21) Anmeldenummer: **09757245.7**

(22) Anmeldetag: **29.05.2009**

(86) Internationale Anmeldenummer:
**PCT/EP2009/003874**

(87) Internationale Veröffentlichungsnummer:
**WO 2009/146862 (10.12.2009 Gazette 2009/50)**

(54) **MEHRFREQUENZBAND-EMPFÄNGER**

MULTI-FREQUENCY BAND RECEIVER

RÉCEPTEUR À BANDE MULTIFRÉQUENCE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **04.06.2008 DE 102008026698**

(43) Veröffentlichungstag der Anmeldung:
**23.02.2011 Patentblatt 2011/08**

(73) Patentinhaber: **Fraunhofer Gesellschaft zur Förderung der angewandten Wissenschaft E.V.**
**80686 München (DE)**

(72) Erfinder:
• **RÜGAMER, Alexander**
**97342 Obernbreit (DE)**
• **URQUIJO TARDIO, Santiago**
**91056 Erlangen (DE)**

(74) Vertreter: **Zinkler, Franz et al**
**Schoppe, Zimmermann, Stöckeler & Zinkler**
**Patentanwälte**
**Postfach 246**
**82043 Pullach bei München (DE)**

(56) Entgegenhaltungen:
**US-A1- 2007 096 980      US-A1- 2007 159 385**

• **PIZZARULLI A ET AL: "Reconfigurable and simultaneous dual band Galileo/GPS front-end receiver in 0.13Î 1/4 m RFCMOS" 5. Mai 2008 (2008-05-05), POSITION, LOCATION AND NAVIGATION SYMPOSIUM, 2008 IEEE/ION, IEEE, PISCATAWAY, NJ, USA, PAGE(S) 846 - 850 , XP031288932 ISBN: 978-1-4244-1536-6 in der Anmeldung erwähnt Zusammenfassung Abbildungen 2,3 Spalten 1-6**
• **L. MARRADI ET AL.: "The Galileo Ground Segment Reference Receiver Development: Architecture and Critical Design Issues" ION GPS/GNSS 2003, 12. September 2003 (2003-09-12), Seiten 1929-1940, XP002545256 Portland, U.S.A.**
• **D. AKOS ET AL.: "A Prototyping Platform for Multi-Frequency GNSS Receivers" ION GPS/ GNSS 2003, 12. September 2003 (2003-09-12), Seiten 117-128, XP002545261 Portland, U.S.A.**

**Beschreibung**

Ausführungsbeispiele gemäß der Erfindung beziehen sich auf die drahtlose Datenkommunikation und im Besonderen auf einen Mehrfrequenzband-Empfänger und auf ein Verfahren zum Empfangen von Signalen mit einem Mehrfrequenzband-Empfänger.

Denkbare Eingangsarchitekturen bzw. Frontendarchitekturen ("Frontend": eingangsseitige Komponente) für Global Navigation Satellite System Empfänger (GNSS-Empfänger, GNSS: "global navigation satellite system", globales Navigationssatellitensystem) sind nur für den Empfang von jeweils einem Frequenzband ausgelegt. Für hochgenaue GNSS-Empfänger ist aber gerade der Empfang von mehreren Frequenzbändern von herausragender Bedeutung, da sich erst damit Ungenauigkeiten durch beispielsweise Ionosphäreneffekte herausrechnen lassen.

Derzeit werden bei Eingangsstufen bzw. Frontends für GNSS Mehrfrequenzband-Empfänger die einzelnen Frequenzbänder separat verarbeitet. Somit ist für jedes Frequenzband eine einzelne Eingangsstufe bzw. ein einzelnes Frontend nötig. Das beinhaltet oft auch, dass für jedes Frequenzband eine eigene Basisbandstufe und eine eigene Oszillatorstufe benötigt werden. Dadurch wird eine hohe Anzahl von Komponenten und somit auch viel Platz benötigt. Genauso summiert sich der Stromverbrauch der Eingangsstufen der verschiedenen Frequenzbänder nicht unerheblich, was beispielsweise bei mobilen Satellitennavigationsempfängern, aber auch in vielen anderen Bereichen, oft kritisch ist.

Eine einzelne, für mehrere Frequenzbänder ausreichend breitbandige Eingangsstufe bzw. ausreichend breitbandiges Frontend ist sehr aufwändig und benötigt aufgrund der hohen Bandbreite viel Strom. Die hohe Bandbreite ist allerdings notwendig, da die Frequenzbänder oft weit voneinander entfernt liegen. So liegt beispielsweise im "Galileo"-GNSS das E1 Band etwa 380 MHz über dem E5a/b Band. Eine Bandbreite von etwa 430 MHz wäre erforderlich.

Die Verarbeitung von mehreren Frequenzbändern in nur einer breitbandigen Eingangsstufe treibt nicht nur den Stromverbrauch stark in die Höhe, auch die Anforderungen an die verschiedenen Komponenten sind sehr hoch, da die Komponenten für einen großen Frequenzbereich ausgelegt sein müssen.

Andere Ansätze verwenden eine bei Bedarf auf andere Frequenzbänder umschaltbare Eingangsarchitektur bzw. Frontendarchitektur, was aber beispielsweise für die Ionosphärenkorrektur keinen Vorteil bringt, da hierfür mindestens zwei Frequenzbänder zeitgleich zur Verfügung stehen müssen. Somit ist für alle Anwendungen, die zeitnahe Informationen aus mehreren Frequenzbändern benötigen, eine umschaltbare Eingangsarchitektur, die die verschiedenen Frequenzbänder hintereinander verarbeitet, nicht brauchbar.

Die US 2007/0096980 A1 zeigt einen RF-Empfänger für GNSS-Signale bestehend aus einem Einzelchip und einer geringen Anzahl von externen Komponenten und hat eine Anzahl von unabhängigen Signalpfaden, wobei jeder eine separate IF-Stufe und Basisband Abwärts-Wandler aufweist. Jeder Signalpfad ist an ein bestimmtes IF-Band durch die Auswahl eines externen IF-Filters angepasst. Die Lokaloszillatorfrequenz liegt mittig zwischen allen zu bearbeitenden Frequenzbändern des Empfängers.

Des Weiteren zeigt die CA 2542702 A1 einen Multi-Band-Empfänger zur Verwendung bei Satelliten-Entfernungs-Systemen.

Die WO 2006/038050 A1 zeigt einen Zweifrequenzempfänger für Signale mit ausgedehntem Spektrum, wobei ein Empfangssignal erhalten wird, das ein erstes Signal mit einer ersten Frequenzmitte und ein zweites Signal mit einer zweiten Frequenzmitte aufweist. Die Verarbeitung erfolgt in einem Pfad.

Des Weiteren zeigt die US 6,038,248 ein Verfahren und eine Vorrichtung zum Empfang und zur Umwandlung eines Signals mit ausgedehntem Spektrum. Die Verarbeitung erfolgt wiederum in einem Pfad.

Die WO 2008/000383 A1 zeigt einen Signalaufbereiter zum Verarbeiten eines Empfangssignals mit einem ersten Nutzfrequenzband und einem zweiten Nutzfrequenzband. Die Verarbeitung der Frequenzbänder erfolgt in einem Pfad.

Des Weiteren zeigt die WO 01/39364 A1 einen Multibandempfänger. Die Verarbeitung der Signale erfolgt wieder nur in einem Pfad.

Zusätzlich zeigt "Pizzarulli, A.; et al.: Reconfigurable and simultaneous dual band Galileo/GPS front-end receiver in 0.13 μm RFCMOS" einen rekonfigurierbaren und simultanen Dualband-Galileo/GPS-Frontend-Empfänger, der in 0,13 μm RFCMOS-Technologie (radio frequency complementary metal oxide semi-conductor, Radiofrequenz-komplementärer-MetallOxid-Halbleiter) realisiert wurde. Das Front-end benutzt nur eine fixe PLL und einen VCO mit einer Superheterodyn-Architektur zum Hinunterkonvertieren von zwei RF (Radiofrequenz) Signalen in zwei IF (Zwischenfrequenz) Signale im Bereich von 50 MHz bis 150 MHz. L1 und E1 Signale werden direkt in einem Kanal mit einem Mischer konvertiert. L2, E6, E5, E5a, E5b Signale werden mit einer Doppelstufen (2 Mischer)-Umwandlung hinunterkonvertiert.

Die DE 10 2006 029 482 A1 zeigt einen Empfänger und ein Verfahren zum Empfang eines ersten Nutzfrequenzbandes und eines zweiten Nutzfrequenzbandes, wobei die Nutzfrequenzbänder voneinander beabstandet sind, und umfasst eine Bandpassfiltereinrichtung zur Filterung eines oder mehrerer Empfangssignale, wobei die Bandpassfiltereinrichtung ausgebildet ist, um ein Kombinationssignal, das das erste Nutzfrequenzband und das zweite Nutzfrequenzband aufweist, oder um ein erstes Bandpassfiltersignal, das das erste Nutzfrequenzband aufweist, und ein zweites Bandpassfiltersignal, das das zweite Nutzfrequenzband aufweist, zu liefern. Der Empfänger umfasst ferner eine Mischereinrichtung zum-Umsetzen des Kombinationssignals oder des ersten Bandpassfiltersignals und des zweiten Bandpassfiltersignals mit einem Lokaloszillator-Signal, dessen Frequenz so ausgewählt ist, dass das erste Nutzfrequenzband und das zweite Nutzfrequenzband bezüglich der Frequenz des LokaloszillatorSignals zumindest teilweise Spiegelbänder zueinander sind, um ein erstes Zwischenfrequenz-Signal und ein zweites Zwischenfrequenz-Signal zu erhalten. Weiterhin weist der Empfänger eine Zwischenfrequenzfiltereinrichtung zum Filtern des ersten Zwischenfrequenz-Signals und des zweiten Zwischenfrequenz-Signals auf, um ein erstes gefiltertes Zwischenfrequenz-Signal und ein zweites gefiltertes Zwischenfrequenzsignal zu erhalten.

Des Weiteren zeigt die WO 2006/085255 A1 einen Empfänger zum gleichzeitigen Empfangen verschiedener Radiofrequenz-Signale entsprechend verschiedener Standards mit einer ersten Frequenzumsetzungsstufe zur Konvertierung des Radiofrequenz-Signals in ein erstes Zwischenfrequenz-Signal und einer zweiten Frequenzumsetzungsstufe zur Konvertierung des ersten Zwischenfrequenz-Signals in ein zweites Zwischenfrequenz-Signal und einer Verarbeitungsstufe zur Wiedergewinnung einer ersten Information von dem ersten Zwischenfrequenz-Signal und einer zweiten Information von dem zweiten Zwischenfrequenz-Signal.

L. MARRADI ET AL.: "The Galileo Ground Segment Reference Receiver Development: Architecture and Critical Design Issues" ION GPS/GNSS 2003, 12. September 2003 (2003-09-12), Seiten 1929-1940, XP002545256, offenbaren eine Mehrpfadumgebung im Zusammenhang mit dem Galileo-Projekt.

D. AKOS ET AL.: "A Prototyping Platform for Multi-Frequency GNSS Receivers" ION GPS/GNSS 2003, 12. September 2003 (2003-09-12), Seiten 117-128, XP002545261, lehren eine Plattform für Mehrfrequenz-Sattelitennavigationssysteme.

Die Aufgabe der vorliegenden Erfindung ist es, einen Mehrfrequenzband-Empfänger zur Verarbeitung von Signalen aus mehr als zwei Frequenzbändern zu schaffen, der eine geringe Anzahl an Komponenten benötigt und einen geringen Stromverbrauch aufweist.

Diese Aufgabe wird durch eine Vorrichtung gemäß Anspruch 1 und ein Verfahren gemäß Anspruch 14 gelöst.

Ein Ausführungsbeispiel gemäß der Erfindung schafft einen Mehrfrequenzband-Empfänger, der einen ersten Pfad, der ausgelegt ist, um ein erstes Frequenzband und ein zweites Frequenzband zu verarbeiten, und einen zweiten Pfad, der ausgelegt ist, um ein drittes Frequenzband zu verarbeiten, umfasst. Dabei weist das erste Frequenzband und das zweite Frequenzband einen kleineren Abstand als das erste Frequenzband und das dritte Frequenzband und einen kleineren Abstand als das zweite Frequenzband und das dritte Frequenzband auf. Des Weiteren umfasst der Mehrfrequenzband-Empfänger eine Oszillatorstufe zur Bereitstellung eines Lokaloszillatorsignals, das eine Frequenz aufweist, die zwischen der Mittenfrequenz des ersten Frequenzbands und der Mittenfrequenz des zweiten Frequenzbands liegt, wobei der erste Pfad einen Mischer aufweist, der mit dem Lokaloszillatorsignals versorgbar ist, und wobei der zweite Pfad einen Mischer aufweist, der ebenfalls mit dem Lokaloszillatorsignals versorgbar ist. Ein weiteres Merkmal des Mehrfrequenzband-Empfängers ist eine Basisbandstufe zur Verarbeitung von Ausgangssignalen des ersten Pfads und des zweiten Pfads, um ein Empfangssignal zu erhalten.

Ausführungsbeispiele gemäß der Erfindung basieren auf dem Kerngedanken, dass mit einem Empfänger mehr als zwei Frequenzbänder verarbeitet werden, wobei die Anzahl der Pfade, in denen unterschiedliche Frequenzbänder verarbeitet werden, kleiner ist als die Anzahl der zu verarbeitenden Frequenzbänder und größer ist als 1. Dabei werden Frequenzbänder mit kleinem Abstand in einem gemeinsamen Pfad verarbeitet und Frequenzbänder mit einem großen Abstand in unterschiedlichen Pfaden verarbeitet.

Damit wird ein Mittelweg zwischen den beschriebenen Empfängern mit nur einem Verarbeitungspfad für alle Frequenzbänder und Empfängern mit je einem Verarbeitungspfad pro Frequenzband gewählt.

Durch die erfindungsgemäße Zuordnung der zu verarbeitenden Frequenzbänder, je nach deren Abstand zueinander, in getrennte oder gemeinsame Pfade, kann die Anzahl der Komponenten und somit auch der Platzbedarf reduziert werden, was auch direkt zu einer Kostenreduktion führt.

Andererseits wird auch der Stromverbrauch gesenkt.

Zusätzlich können die Anforderungen an die Komponenten, im Vergleich zu einem Empfänger mit nur einem Verarbeitungspfad für alle Frequenzbänder, entspannt werden, da für die einzelnen Pfade Komponenten mit geringeren Bandbreiten notwendig sind, was ebenfalls zu einer Kostenersparnis führt.

Zusätzlich kann durch die Nutzung des gleichen Lokaloszillatorsignals in mehreren Pfaden die Anzahl der notwendigen Oszillatoren bzw. die Komplexität der Oszillatorstufe gesenkt werden, wodurch noch weitere Komponenten eingespart werden können.

Bei einigen Ausführungsbeispielen wird durch die Anpassung des Lokaloszillatorsignals der Oszillatorstufe an die Frequenzbänder, die in einem gemeinsamen Pfad bearbeitet werden, beispielsweise eine Spiegelfrequenzunterdrückung entfallen, da dann ein Frequenzband die Spiegelfrequenz eines anderen Frequenzbands darstellt. Damit kann die Komplexität und dadurch wiederum die Anzahl der notwendigen Komponenten gesenkt werden.

Bei einigen weiteren Ausführungsbeispielen kann, durch eine Anpassung der Signale der Oszillatorstufe auf die zu verarbeitenden Frequenzbänder, der Empfänger mit nur einer Oszillatorstufe und mit nur einer Basisbandstufe auskommen, was zu einer Reduktion der notwendigen Komponenten führt und damit die Effizienz hinsichtlich Platz-, Kosten- und Leistungsaufnahme steigert.

Bei einigen Ausführungsbeispielen gemäß der Erfindung sind zumindest zwei der Frequenzbänder, die in einem gemeinsamen Pfad verarbeitet werden, so moduliert, dass während der Verarbeitung der Signale ein Hochpassfilter störende Effekte wie 1/f-Rauschen oder einen DC-Offset (DC-Offset: Gleichspannungsversatz) unterdrücken kann.

Einige Ausführungsbeispiele gemäß der Erfindung umfassen einen Kombinierer, der ausgelegt ist, um ein Signal an einem Ausgang des ersten Pfads und ein Signal an einem Ausgang des zweiten Pfads zu überlagern und das überlagerte Signal einem Eingang der Basisbandstufe zur Verfügung zu stellen. Dabei sind das Signal am Ausgang des ersten Pfads und das Signal am Ausgang des zweiten Pfads so ausgelegt, dass Informationen der einzelnen Signale trotz der Überlagerung wieder getrennt werden können. Dadurch kann der Mehrfrequenzband-Empfänger beispielsweise mit nur einer Basisbandstufe realisiert werden.

Einige Ausführungsbeispiele gemäß der Erfindung ermöglichen den simultanen Empfang von drei Frequenzbändern mit einer minimalen Anzahl an Komponenten und nur einer einzigen Oszillatorstufe bzw. nur einem einzigen Frequenzsynthesizer, was eine Integration und ein kompaktes sowie leistungsarmes Design (Aufbau) ermöglicht.

Einige Ausführungsbeispiele gemäß der Erfindung beziehen sich auf eine Eingangsarchitektur bzw. Frontendarchitektur für GNSS (GNSS: "global navigation satellite system", globales Navigationssatellitensystem) Mehrfrequenzband-Empfänger.

Ausführungsbeispiele gemäß der Erfindung werden nachfolgend Bezug nehmend auf die beiliegenden Figuren näher erläutert. Es zeigen:

Fig. 1     ein Blockschaltbild eines Mehrfrequenzband-Empfängers;

Fig. 2     ein Blockschaltbild einer Antennenstufe eines Mehrfrequenzband-Empfängers;

Fig. 3     eine schematische Darstellung eines Leistungsdichte-Frequenz-Diagramms von Signalen;

Fig. 4     eine schematische Darstellung einer Schnittstelle zwischen dem ersten Pfad und dem zweiten Pfad auf der einen Seite und der Basisbandstufe auf der anderen Seite eines Mehrfrequenzband-Empfängers;

Fig. 5     ein Blockschaltbild einer Oszillatorstufe eines Mehrfrequenzband-Empfängers;

Fig. 6     ein Blockschaltbild eines Mehrfrequenzband-Empfängers;

Fig. 7     eine schematische Darstellung eines Leistungsdichte-Frequenz-Diagramms bzw. eines Leistungsdichtespektrums eines komplexen Basisbandsignals; und

Fig. 8     ein Flussdiagramm eines Verfahrens zum Empfangen von Signalen mit einem MehrfrequenzbandEmpfänger.

Fig. 9     ein Blockschaltbild eines Kombinierers eines Mehrfrequenzband-Empfängers

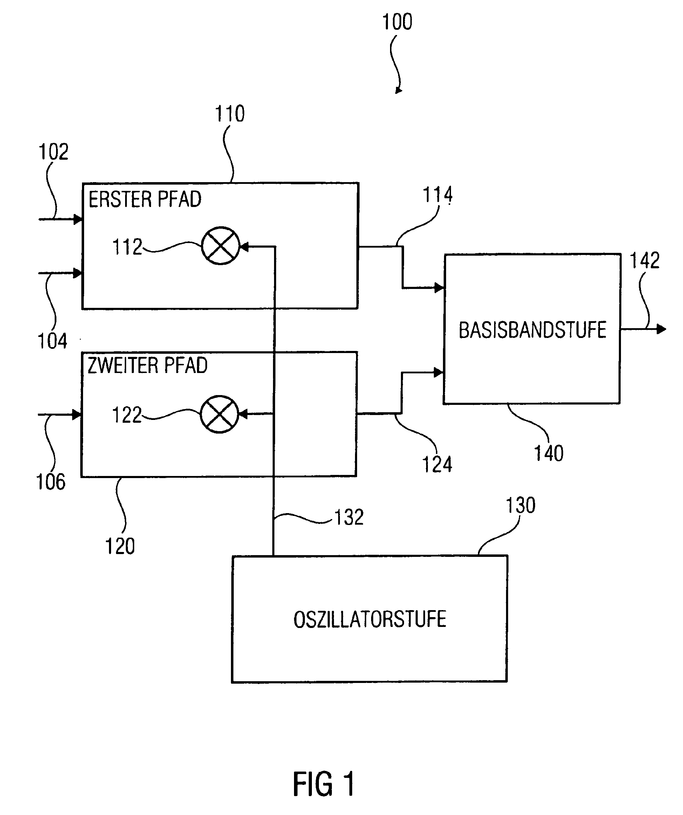

Fig. 1 zeigt ein Blockschaltbild eines Mehrfrequenzband-Empfängers 100 entsprechend einem Ausführungsbeispiel gemäß der Erfindung. Der Empfänger 100 umfasst einen ersten Pfad 110 zur Verarbeitung eines ersten Frequenzbands 102 und eines zweiten Frequenzbands 104 und einen zweiten Pfad 120 zur Verarbeitung eines dritten Frequenzbands 106. Dabei weisen das erste Frequenzband 102 und das zweite Frequenzband 104 einen kleineren Abstand als das erste Frequenzband 102 und das dritte Frequenzband 106 und einen kleineren Abstand als das zweite Frequenzband 104 und das dritte Frequenzband 106 auf. Des Weiteren umfasst der Empfänger eine Oszillatorstufe 130 zur Bereitstellung eines Lokaloszillatorsignals 132. Die Frequenz des Lokaloszillatorsignals 132 liegt dabei zwischen der Mittenfrequenz des ersten Frequenzbands 102 und der Mittenfrequenz des zweiten Frequenzbands 104. Zusätzlich weisen der erste Pfad 110 und der zweite Pfad 120 je einen Mischer 112,122 auf, wobei beide Mischer 112, 122 mit dem gleichen Lokaloszillatorsignal 132 versorgbar sind. Des Weiteren umfasst der Empfänger 100 eine Basisbandstufe 140, die zur Verarbeitung von Ausgangssignalen 114 des ersten Pfads 110 und von Ausgangssignalen 124 des zweiten Pfads 120 dient, um ein Empfangssignal 142 zu erhalten.

Durch die Verarbeitung von Frequenzbändern mit geringem Abstand im selben Signalverarbeitungspfad und der separaten Verarbeitung von Frequenzbändern mit großem Abstand in unterschiedlichen Signalverarbeitungspfaden kann die notwendige Bandbreite für jeden einzelnen Pfad gering gehalten werden, was beispielsweise den Stromverbrauch senkt. Zusätzlich können die Anforderungen an die Komponenten, im Vergleich zu einem Empfänger mit nur einem Verarbeitungspfad für alle Frequenzbänder, entspannt werden, da für die einzelnen Pfade Komponenten mit geringeren Bandbreiten notwendig sind.

Des Weiteren kann der Empfänger 100 so zu gestalten sein, dass nur eine Oszillatorstufe 130 und eine Basisbandstufe 140 benötigt werden, wodurch die Anzahl der notwendigen Komponenten reduziert wird.

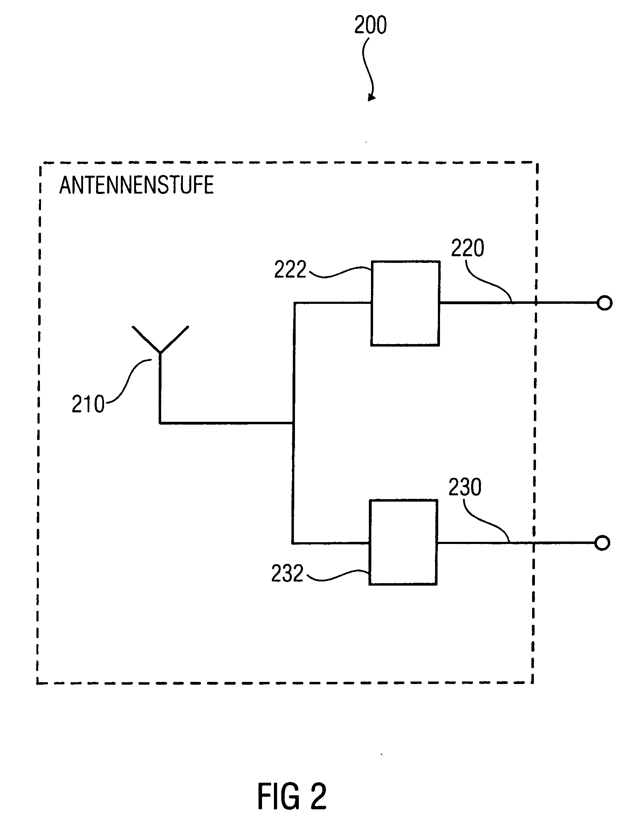

Fig. 2 zeigt ein Blockschaltbild einer Antennenstufe 200 eines Mehrfrequenzband-Empfängers entsprechend einem Ausführungsbeispiel gemäß der Erfindung. Die Antennenstufe 200 umfasst eine Antenne 210, einen ersten Ausgangszweig 220 und einen zweiten Ausgangszweig 230. Dabei weist der erste Ausgangszweig 220 ein erstes Frequenzbandfilter 222 und der zweite Ausgangszweig 230 ein zweites Frequenzbandfilter 232 auf. Das erste Frequenzbandfilter 222 ist dabei für einen Frequenzbereich, der das erste Frequenzband 102 und das zweite Frequenzband 104 umfasst, ausgelegt und das zweite Frequenzbandfilter 232 ist für einen Frequenzbereich, der das dritte Frequenzband 106 umfasst, ausgelegt. Dabei liegen das erste Frequenzband 102 und das zweite Frequenzband 104 nicht innerhalb der oberen und unteren Grenzfrequenz des zweiten Frequenzbandfilters 232. Genau so liegt das dritte Frequenzband 106 nicht innerhalb der oberen und unteren Grenzfrequenz des ersten Frequenzbandfilters 222.

Durch die beschriebene Anpassung der Grenzfrequenzen der Frequenzbandfilter 222, 232 können am Ausgang des ersten Ausgangszweigs 220 Signale des ersten Frequenzbands 102 und des zweiten Frequenzbands 104 zur Verfügung gestellt werden, nicht jedoch die Signale des dritten Frequenzbands 106. Entsprechend können am Ausgang des zweiten Ausgangszweigs 230 Signale des dritten Frequenzbands 106 zur Verfügung gestellt werden, nicht jedoch die Signale des ersten Frequenzbands 102 und des zweiten Frequenzbands 104.

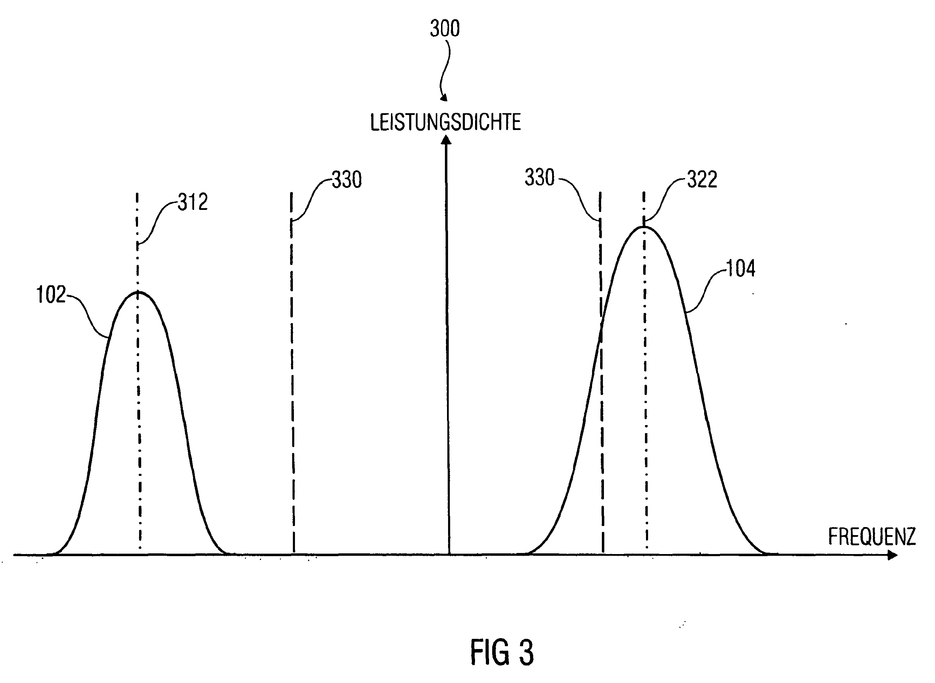

Fig. 3 zeigt eine schematische Darstellung eines Leistungsdichte-Frequenz-Diagramms 300 von Signalen, wie sie beispielsweise in dem ersten Frequenzband 102 und in dem zweiten Frequenzband 104 vorkommen können. Das Diagramm 300 zeigt ein mögliches Frequenzspektrum des ersten Frequenzbands 102 und des zweiten Frequenzbands 104, die so moduliert sein können, dass mindestens 50 %, bevorzugt jedoch mehr als 90%, der modulierten Leistung von jedem der beiden Frequenzbänder in einem Frequenzbereich liegt, dessen Absolutbetrag größer ist als ein Wert einer Modulationsgrenzfrequenz 330. Dabei markiert die strichpunktierte Linie 312 im Bereich des ersten Frequenzbands 102 eine Frequenz, bei der 50 % der modulierten Leistung des ersten Frequenzbands 102 in einem Bereich mit höheren Frequenzen liegt und 50 % der modulierten Leistung des ersten Frequenzbands 102 in einem Bereich mit niedrigeren Frequenzen liegt. Dementsprechend markiert die zweite strichpunktierte Linie 322 im Bereich des zweiten Frequenzbands 104 eine Frequenz, bei der 50 % der modulierten Leistung des zweiten Frequenzbands 104 in einem Bereich mit höheren Frequenzen liegt und 50 % der modulierten Leistung des zweiten Frequenzbands 104 in einem Bereich mit niedrigeren Frequenzen liegt. Die strichlierten Linien markieren beispielhaft einen Wert für eine Modulationsgrenzfrequenz 330.

Bei einigen Ausführungsbeispielen gemäß der Erfindung kann bei Vorliegen eines Frequenzspektrums, wie es in Fig. 3 gezeigt ist, ein Hochpassfilter, mit einer Hochpassgrenzfrequenz die der Modulationsgrenzfrequenz 330 entspricht, genutzt werden, um störende Effekte, wie beispielsweise 1/f-Rauschen oder einen DC-Offset (DC-Offset: Gleichspannungsversatz), zu unterdrücken. Beispielsweise kann durch eine erfindungsgemäße Wahl der Frequenz des Lokaloszillatorsignals, das den Mischer 112 in dem ersten Pfad 110 versorgt, ein Frequenzspektrum, wie es in Fig. 3 gezeigt ist, erzeugt werden und dementsprechend ein Hochpassfilter in der beschriebenen Form eingesetzt werden.

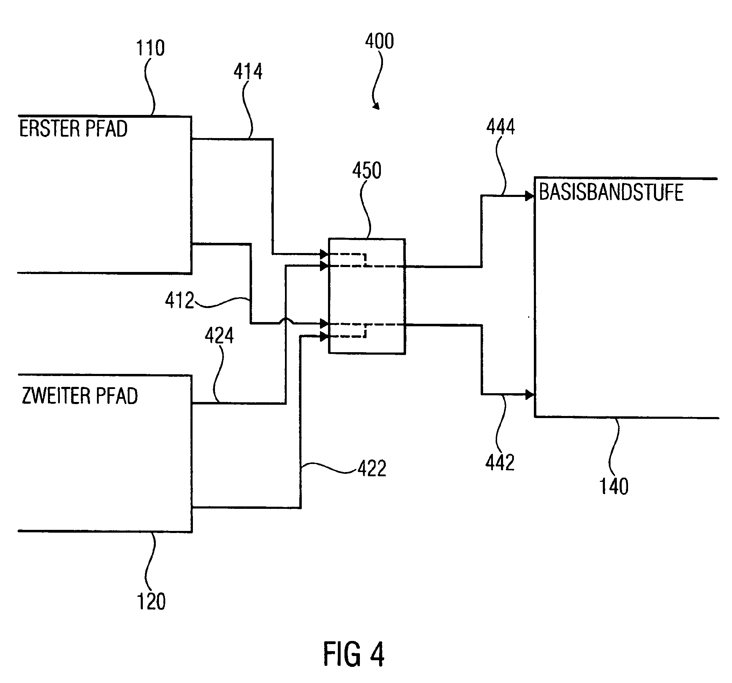

Fig. 4 zeigt eine schematische Darstellung einer Schnittstelle 400 zwischen dem ersten Pfad 110 und dem zweiten Pfad 120 auf der einen Seite und der Basisbandstufe 140 auf der anderen Seite eines Mehrfrequenzband-Empfängers entsprechend einem Ausführungsbeispiel gemäß der Erfindung. Die Schnittstelle 400 umfasst einen Kombinierer 450, der ein Ausgangssignal des ersten Pfads 110 mit einem Ausgangssignal des zweiten Pfads 120 überlagert und die Überlagerung als Eingangssignal der Basisbandstufe 140 bereitstellt. Dabei können beispielsweise der erste Pfad 110, der zweite Pfad 120 und die Basisbandstufe 140 in Inphasen-Quadraturphasen-Architektur ausgelegt sein. Der erste Pfad 110 und der zweite Pfad 120 umfassen dazu je einen Inphasen-Ausgang 412, 422 und einen Quadraturphasen-Ausgang 414, 424 und die Basisbandstufe 140 umfasst einen Inphasen-Eingang 442 und einen Quadraturphasen-Eingang 444. Der Kombinierer 450 überlagert dabei Signale des Inphasen-Ausgangs 412 des ersten Pfads 110 mit Signalen des Inphasen-Ausgangs 422 des zweiten Pfads 120 und stellt die überlagerten Signale der Basisbandstufe 140 an ihrem Inphasen-Eingang 442 zur Verfügung. Entsprechend überlagert der Kombinierer 450 Signale des Quadraturphasen-Ausgangs des ersten Pfads 110 mit Signalen des Quadraturphasen-Ausgangs des zweiten Pfads 120 und stellt die überlagerten Signale der Basisbandstufe 140 an ihrem Quadraturphasen-Eingang 444 zur Verfügung. Dabei sind die Signale an den Ausgängen 412, 414 des ersten Pfads 110 und Signale an den Ausgängen 422, 424 des zweiten Pfads 120 so ausgelegt, dass die Informationen der einzelnen Signale trotz der Überlagerung wieder voneinander getrennt werden können. Dies kann beispielsweise durch die Inphasen-Quadraturphasen-Architektur gewährleistet sein. Des Weiteren können die Signale in den unterschiedlichen Frequenzbändern durch ein Zeitmultiplexverfahren (TDMA), ein Frequenzmultiplexverfahren (FDMA) oder ein Codemultiplexverfahren (CDMA) moduliert sein. Es kann dadurch ermöglicht werden, dass die Informationen der unterschiedlichen Signale erst in einem Digitalteil der Basisbandstufe 140 oder in einem Digitalteil eines nachfolgenden Bauteils getrennt werden.

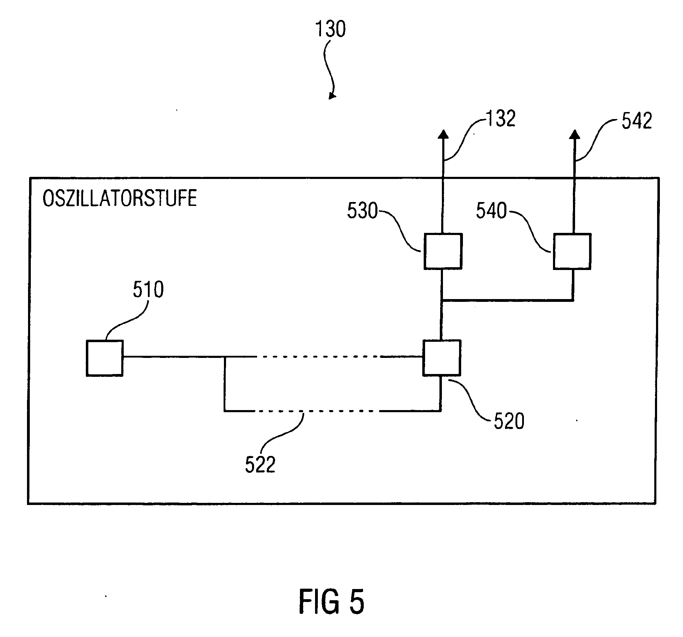

Fig. 5 zeigt ein Blockschaltbild einer Oszillatorstufe 130 eines Mehrfrequenzband-Empfängers entsprechend einem Ausführungsbeispiel gemäß der Erfindung. Die Oszillatorstufe 130 umfasst genau einen Referenzoszillator 510 und genau einen spannungsgesteuerten Oszillator 520, wobei der spannungsgesteuerte Oszillator 520 durch eine Phasenregelschleife 522 gesteuert werden kann. Der spannungsgesteuerte Oszillator 520 liefert ein Grundoszillatorsignal, aus dem beispielsweise durch einen Teiler 530 ein Lokaloszillatorsignal 132 erzeugt werden kann. Des Weiteren kann durch einen weiteren Teiler 540 aus dem Grundoszillatorsignal ein weiteres Lokaloszillatorsignal 542 erzeugt werden.

Durch eine Abstimmung der Frequenzen des Referenzoszillators 510 und des spannungsgesteuerten Oszillators 520 auf den Frequenzbereich der Frequenzbänder, die durch den Mehrfrequenzband-Empfänger verarbeitet werden sollen, kann der Mehrfrequenzband-Empfänger mir nur einer Oszillatorstufe nach dem hier beschriebenen Prinzip auskommen. Es können dann durch diese eine Oszillatorstufe 130 alle Oszillatorsignale bereitgestellt werden, die für den Mehrfrequenzband-Empfänger benötigt werden.

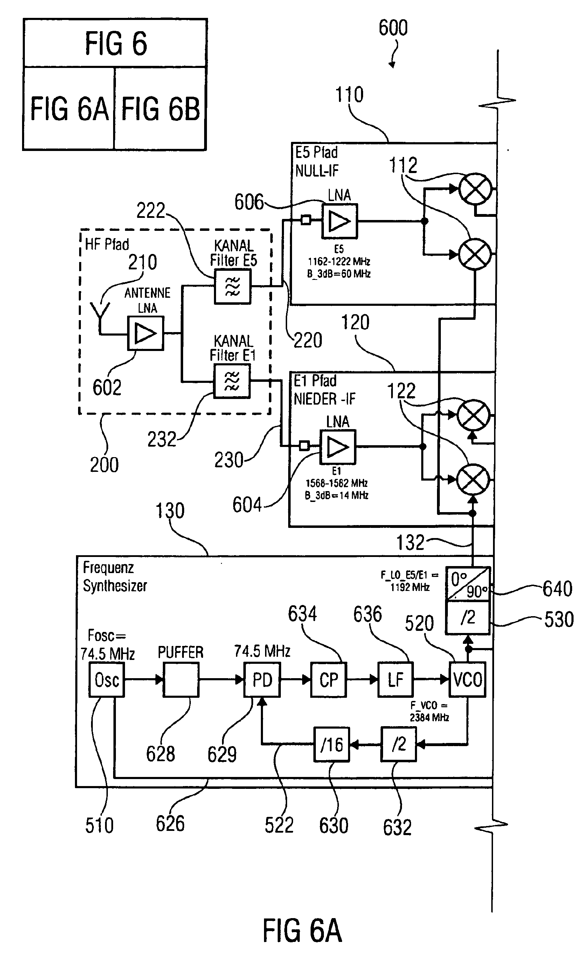

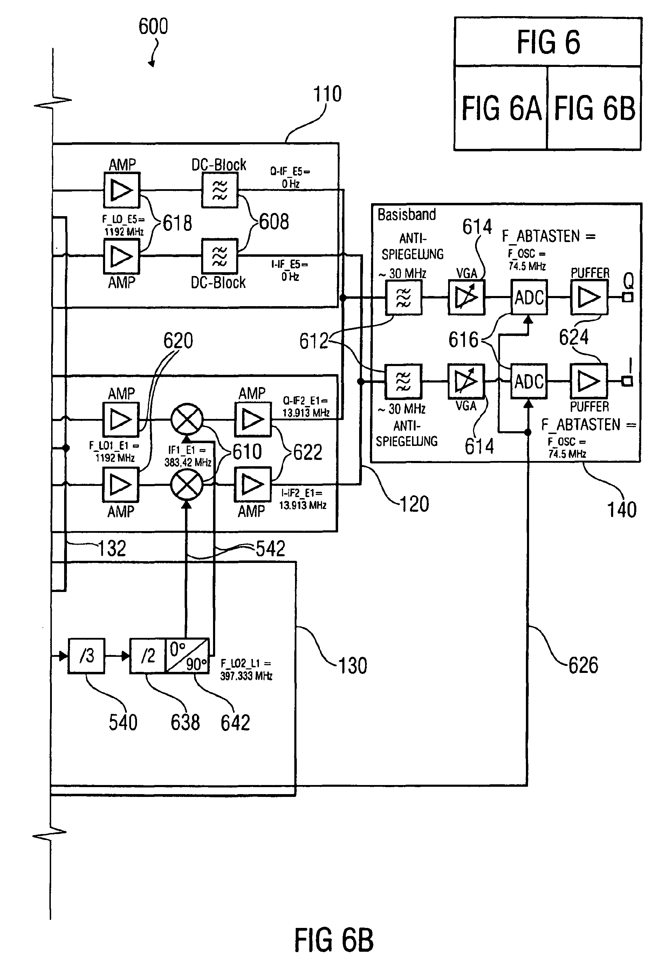

Fig. 6 zeigt ein Blockschaltbild eines Mehrfrequenzband-Empfängers 600 entsprechend einem Ausführungsbeispiel gemäß der Erfindung. Das Ausführungsbeispiel gibt beispielhaft Werte für die verschiedenen Frequenzbänder an, wie sie bei dem "Galileo" GNSS vorkommen. Das erste Frequenzband 102 wird dabei durch das Frequenzband E5a, das zweite Frequenzband 104 wird durch das Frequenzband E5b und das dritte Frequenzband 106 wird durch das Frequenzband E1 dargestellt. Der beschriebene Mehrfrequenzband-Empfänger 600 kann aber auch an andere Frequenzbänder angepasst werden. In diesem Ausführungsbeispiel besteht der HF-Pfad (Hochfrequenzpfad) bzw. die Antennenstufe 200 aus einer Antenne 210 mit einem breitbandigen, rauscharmen Verstärker 602 ("low noise amplifier", LNA) und Frequenzbandfiltern 222, 232. Für eine niedrige Gesamtrauschzahl des Empfängers, und um die Rauschzahlanforderung der Eingangsstufe bzw. des Frontends ("Frontend": eingangsseitige Komponente) zu entspannen, ist ein LNA 602 direkt an der Antenne 210 sinnvoll. Es folgen zwei Frequenzbandfilter 222, 232 für beispielsweise E1 (Mittenfrequenz 1.575,42 MHz; 14 MHz 3-dB-Bandbreite) und E5a/b (Mittenfrequenz 1.191,795 MHz und 51 MHz 3-dB-Bandbreite).

Da ein gemeinsamer LNA für E1 und E5a/b sehr breitbandig sein müsste, was eine hohe Leistungsaufnahme zur Folge hätte, können stattdessen beispielsweise jeweils ein LNA 604 für E1 und ein LNA 606 für E5a/b eingesetzt werden.

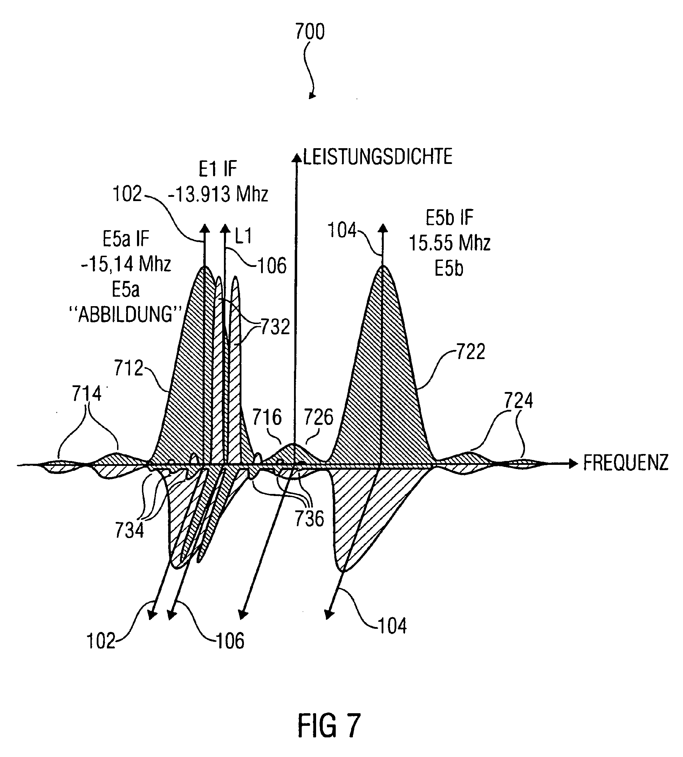

Ein erster Pfad 110 bzw. E5 Pfad ist als "Zero-IF"-Architektur ("Zero-IF": "Zero intermediate frequency", Zwischenfrequenz gleich Null, Null-IF) ausgeführt. Der Lokaloszillator 132 (LO, "local oscillator") mit beispielsweise 1.192 MHz liegt mittig zwischen den Frequenzbändern E5a und E5b. Damit liegt E5a als Spiegelfrequenz zu E5b im gleichen Basisbandbereich. Es wird zum Beispiel ein Inphasen-Quadraturphasen-Mischer 112 eingesetzt. Durch beispielsweise eine AltBOC Modulation (AltBOC: "alternating binary offset carrier", alternierender binärer Versatzträger) im "Galileo" E5 Frequenzband, ist im Basisbandspektrum um 0 bis 5 MHz kaum Nutzsignalleistung enthalten, was beispielsweise in Fig. 7 gezeigt ist. Deshalb werden diese Frequenzen mit einem Hochpass 608 (DC-Block, Gleichstromblock) gefiltert. Dadurch können die typisch störenden Low-IF-Effekte (Low-IF: "low intermediate frequency", niedere Zwischenfrequenz, Nieder-IF), wie beispielsweise 1/f-Rauschen und DC-Offset (DC-Offset: Gleichstromversatz), beseitigt werden, ohne dass das Nutzsignal merkbar verschlechtert wird.

Im zweiten Pfad 120 bzw. E1 Pfad wird das HF-Signal (Hochfrequenzsignal) zunächst mit der gleichen Lokaloszillatorfrequenz 132 wie auch in dem ersten Pfad 110 bzw. E5 Pfad gemischt und somit auf eine erste Zwischenfrequenz ("intermediate frequency"; IF) von ca. 383,42 MHz umgesetzt. Die Spiegelfrequenzunterdrückung erfolgt durch das E1 Frequenzbandfilter 232. Von dieser ersten Zwischenfrequenz bzw. IF aus folgt eine weitere Frequenzumsetzung mit einer Lokaloszillatorfrequenz 542 (LO-Frequenz) von beispielsweise 397,33 MHz auf die Basisband Low-IF (Low-IF: Nieder-IF) von 13,91 MHz. Beide Mischer 122, 610 sind wieder in Inphase und Quadraturphase ausgeführt.

Im gemeinsamen Basisband werden jeweils die Inphasen- und Quadraturphasenzweige vom E1 und E5 Pfad zusammengeführt und zum Beispiel additiv überlagert. Das komplexe Basisband ist beispielsweise in Fig. 7 dargestellt. Es folgt jeweils ein Anti-Aliasing Tiefpassfilter 612 ("Anti-Aliasing": Antispiegelung) mit einer Grenzfrequenz von etwa 30 MHz. Anschließend werden beide Pfade von einem "variable gain amplifier" 614 ("variable gain amplifier": VGA, Verstärker mit variablem Verstärkungsfaktor) konditioniert und jeweils mit einem Analog-Digital-Konverter 616 (ADC) abgetastet. Die ADC Abtastfrequenz kann direkt von der Quarzfrequenz bzw. von der Frequenz des Referenzoszillators 510 abgegriffen werden.

Alle nötigen Lokaloszillatorfrequenzen 132, 542 für die Mischer 112,122,610 vom E5 und E1 Pfad werden aus dem gleichen Frequenzsynthesizer bzw. der gleichen Oszillatorstufe 130 abgeleitet. Die E5 Lokaloszillatorfrequenz (in Fig. 6 auch als F_LO_E5 bezeichnet) entspricht der ersten E1 Lokaloszillatorfrequenz (in Fig. 6 auch als F_LO1_E1 bezeichnet). Die zweite E1 Lokaloszillatorfrequenz (in Fig. 6 auch als F_LO2_E1 bezeichnet) ist beispielsweise genau ein Drittel der ersten und kann somit durch einen einfachen digitalen Frequenzteiler 540 erzeugt werden. Durch diese Frequenzwahl kann der Frequenzsynthesizer bzw. die Oszillatorstufe 130 der "Phase Locked Loop" 522 ("Phase Locked Loop": PLL, Phasenregelschleife) einfach und leistungsarm aufgebaut werden. Zudem ist es möglich, den Frequenzteiler so auszulegen, dass beispielsweise nur digitale "geteilt durch zwei" Teiler nötig sind, welche sich gut integrieren lassen und wenig Leistung benötigen.

Zusätzlich zu den bereits beschriebenen Komponenten weist der erste Pfad 110 bzw. E5 Pfad in Signalverarbeitungsrichtung nach dem Mischer 112 je einen Verstärker 618 in dem Inphasen-Zweig und in dem Quadraturphasen-Zweig auf. Genauso umfasst der zweite Pfad 120 bzw. E1 Pfad nach jedem der beiden Mischer 122, 610 je einen Verstärker 620, 622 in dem Inphasen-Zweig und in dem Quadraturphasen-Zweig.

Die Verstärker 618, 620, 622 können beispielsweise als Verstärker mit variablem Verstärkungsfaktor ausgelegt werden, um zum Beispiel die Leistungspegel zwischen dem ersten Pfad 110 und dem zweiten Pfad 120 anpassen zu können.

Des Weiteren umfasst die Basisbandstufe 140 im Inphasen- und Quadraturphasenzweig je einen Puffer 624, der in Signalverarbeitungsrichtung nach den Analog-Digital-Konvertern 616 angeordnet ist.

Durch die Oszillatorstufe 130 bzw. den Frequenzsynthesizer werden alle benötigten Oszillatorsignale 132, 542 zur Verfügung gestellt. Dafür umfasst die Oszillatorstufe 130 einen Referenzoszillator 510, der eine Frequenz von beispielsweise 74,5 MHz aufweist und dessen Referenzoszillatorsignal 626 direkt für die Ansteuerung der Analog-Digital-Wandler 616 in der Basisbandstufe verwendet werden kann. Des Weiteren ist der Referenzoszillator 510 mit einem Puffer 628 verbunden, von dem aus das Referenzoszillatorsignal an einen Phasendetektor 629, der Teil einer Phasenregelschleife 522 eines spannungsgesteuerten Oszillators 520 ist, weitergeleitet wird. An einem zweiten Eingang des Phasendetektors 629 liegt das Oszillatorsignal des spannungsgesteuerten Oszillators 520 an, das zuvor durch 32 geteilt wurde (wie in Fig. 6 durch die beiden Teiler 630, 632 gezeigt). Nach dem Phasendetektor 629 sind eine Ladungspumpe ("CP": "charge pump", Ladungspumpe) 634 und ein Schleifenfilter 636 angeordnet, die ein Signal liefern, mit dem der spannungsgesteuerte Oszillator 520 gesteuert wird. Der spannungsgesteuerte Oszillator 520 liefert ein Grundoszillatorsignal mit einer Frequenz von beispielsweise 2.384 MHz. Aus dieser Grundfrequenz kann einerseits durch einen "geteilt durch zwei" Teiler 530 das erste Lokaloszillatorsignal 132 (F_LO_E5, F_LO1_E1) mit einer Frequenz von beispielsweise 1.192 MHz erzeugt werden, andererseits kann aus dem Grundoszillatorsignal in einem anderen Zweig die Grundoszillatorfrequenz durch sechs geteilt werden (wie in Fig. 6 durch die beiden Teiler 540, 638 gezeigt) und dadurch das zweite Lokaloszillatorsignal 542 (F_LO2_E1) mit einer Frequenz von beispielsweise 397,33 MHz erzeugt werden. Beide Lokaloszillatorsignale 132, 542 können durch die Oszillatorstufe 130 bzw. den Frequenzsynthesizer für die Inphasen-Quadraturphasen-Mischer 112, 122, 610 als Inphasen-Signal und als beispielsweise 90°-phasenverschobenes Signal (wie in Fig. 6 durch die beiden Phasenglieder 640, 642 gezeigt) zur Verfügung gestellt werden.

Bei der in Figur 6 dargestellten Oszillatorstufe 130 bzw. dem dargestellten Frequenz-Synthesizer können die "geteilt durch 2"-Teiler 530, 632, 638 eingespart werden, wenn ein spannungsgesteuerter Oszillator 520 mit entsprechend halbierter Grundfrequenz verwendet wird. Das ist jedoch nur dann sinnvoll, wenn ein kostengünstiger spannungsgesteuerter Oszillator 520 in ausreichender Qualität verfügbar ist und die Phasenverschiebung für das phasenverschobene Lokaloszillatorsignal entsprechend anders gelöst wird.

Das komplexe Basisbandsignal, das beispielsweise in Fig. 7 gezeigt ist, kann, durch die vorgenommene Inphasen-Quadraturphasen-Umsetzung, im Digitalen wieder getrennt werden. Eine Weiterverarbeitung ist allerdings auch ohne eine solche Trennung möglich, wenn es sich beispielsweise um "Direct Sequence Spread Spectrum" Signale ("Direct Sequence Spread Spectrum": DSSS, direktes Sequenzsstreuungsspektrum) z. B. des "Galileo" GNSS (globales Navigationssatellitensystem) handelt. Beispielsweise mit Hilfe einer Kreuzkorrelationsfunktion kann man das gesuchte Signal erhalten. Das überlagerte Signal verhält sich hierbei als nahezu reines, weißes Rauschen. Durch den hohen Spreizfaktor der DSSS Signale, kann das zusätzliche Rauschen gut kompensiert werden.

Der in Fig. 6 gezeigte Mehrfrequenzband-Empfänger kann beispielsweise als Drei-Frequenzband "Galileo" GNSS Empfänger verwendet werden.

Einige Ausführungsbeispiele gemäß der Erfindung stellen eine Eingangsarchitektur bzw. Frontend-Architektur mit einer minimalen Anzahl an Komponenten für einen hochgenauen GNSS Mehrfrequenzband-Empfänger dar. Beispielsweise können die drei "Galileo" GNSS Frequenzbänder (E1, E5a und E5b) damit gleichzeitig empfangen werden. Bei entsprechender Anpassung der Frequenzen lässt sich diese Architektur auch zum Beispiel für Frequenzbänder von anderen GNSS (wie beispielsweise "Navstar" oder "Compass") oder zum gleichzeitigen Empfang von Frequenzbändern aus verschiedenen Systemen einsetzen. Durch die geringe Anzahl an nötigen Komponenten bietet sich eine kompakte und leistungsarme Integration an.

Weitere Ausführungsbeispiele gemäß der Erfindung ermöglichen beispielsweise die Galileo Frequenzbänder E1, E5a und E5b zeitgleich zu empfangen. Die maximal notwendige HF-Bandbreite kann nur etwa 60 MHz betragen. Die letztlich abgetastete Basisbandbreite liegt bei unter 30 MHz. Durch erfindungsgemäße Auslegung des Frequenzsynthesizers bzw. der Oszillatorstufe und dessen Nutzung, sowie Überlagerung der drei Frequenzbänder im Basisband, können Platz-, Kosten- und Leistungsaufwand des Empfängers minimiert werden. Eine hoch integrierte, kompakte Lösung mit niedriger Leistungsaufnahme ist daher möglich.

Einige Ausführungsbeispiele gemäß der Erfindung stellen eine Eingangsarchitektur bzw. Frontend-Architektur für einen "Galileo" GNSS Drei-Frequenzband-Empfänger (E1, E5a und E5b) dar und benötigen weniger Komponenten als es bei zwei oder drei unabhängigen Empfängern der Fall wäre.

Weitere Ausführungsbeispiele gemäß der Erfindung benötigen nur einen Frequenzsynthesizer bzw. eine Oszillatorstufe, aus dem sich alle notwendigen Frequenzen leicht ableiten lassen. Des Weiteren kann der Frequenzteiler durch einfache, digitale "geteilt durch zwei" Glieder aufgebaut werden.

Bei einigen Ausführungsbeispielen gemäß der Erfindung kann die Spiegelfrequenzunterdrückung in beiden Pfaden komplett entfallen. In dem ersten Pfad bzw. E5 Pfad nutzt man die Spiegelfrequenz sogar, in dem zweiten Pfad bzw. E1 Pfad wird die Spiegelfrequenzunterdrückung schon durch das vorhergehende E1 Bandfilter an der Antenne im HF Pfad gewährleistet.

Bei weiteren Ausführungsbeispielen gemäß der Erfindung können die großen Nachteile der Low-IF-Architektur, wie beispielsweise ein DC-Offset (DC-Offset: Gleichspannungsversatz) oder 1/f-Rauschen, z. B. durch einen Hochpass im E5 Basisbandbereich beseitigt werden, ohne merklich an Information im Nutzsignal zu verlieren, da beispielsweise das "Galileo" E5 Band Alt-BOC (15, 10) moduliert ist.

Einige Ausführungsbeispiele gemäß der Erfindung können durch beispielsweise additive Überlagerung der Inphasen- und Quadraturphasen-Pfade mit jeweils nur einem ADC im Basisband für alle drei Frequenzbänder auskommen.

Bei weiteren Ausführungsbeispiel gemäß der Erfindung wird es durch die genannten Verbesserungen beispielsweise möglich, einen hoch integrierten Empfänger für die drei "Galileo" Frequenzbänder E1, E5a und E5b zu entwickeln, der nur eine minimale Anzahl an Komponenten benötigt und zugleich effizient hinsichtlich Platz-, Kosten- und Leistungsaufnahme sein kann.

Für hochgenaue Navigation müssen Störungen beispielsweise durch die Ionosphäre korrigiert werden. Dabei sind zumindest zwei verschiedene Frequenzbänder unerlässlich.

Fig. 7 zeigt eine schematische Darstellung eines Leistungsdichte-Frequenz-Diagramms bzw. eines Leistungsdichtespektrums eines komplexen Basisbandsignals, wie es beispielsweise bei einem Mehrfrequenzband-Empfänger, wie in Fig. 6 gezeigt, vorkommen kann. Das Diagramm 700 zeigt nach oben die Inphasen-Komponente der Leistungsdicht und nach unten die Quadraturphasen-Komponente der Leistungsdichte, wobei die Inphasen-Komponente des ersten Frequenzbands 102 und des zweiten Frequenzbands 104 als schwarze Flächen dargestellt sind, und die Inphasen-Komponente des dritten Frequenzbands 106 als schraffierte Flächen dargestellt ist. Umgekehrt sind die Quadraturphasen-Komponenten des ersten Frequenzbands 102 und des zweiten Frequenzbands 104 als schraffierte Flächen und die Quadraturphasen-Komponente des dritten Frequenzbands 106 als schwarze Fläche dargestellt.

Neben dem Hauptmaximum 712 besitzt das erste Frequenzband 102 benachbart zu dem Hauptmaximum 712 noch auf der linken Seite zwei Nebenmaxima 714 und auf der rechten Seite ein Nebenmaximum 716. Spiegelverkehrt dazu besitzt das zweite Frequenzband 104 benachbart zu einem Hauptmaximum 722 auf der rechten Seite zwei Nebenmaxima 724 und auf der linken Seite ein Nebenmaximum 726. Das dritte Frequenzband 106 besitzt in diesem Beispiel zwei Hauptmaxima 732 mit je drei Nebenmaxima 734 auf der rechten Seite und drei Nebenmaxima 736 auf der linken Seite.

Dabei liegen, durch eine erfindungsgemäße Wahl der Frequenz des Lokaloszillatorsignals 132, das erste Frequenzband 102 bzw. E5a im Basisband um eine Frequenz von -15,14 MHz und das zweite Frequenzband 104 bzw. E5b im Basisband um eine Frequenz von 15,55 MHz. Das erste Frequenzband 102 bzw. E5a liegt also als Spiegelfrequenz des zweiten Frequenzbands 104 bzw. E5b vor und eine Spiegelfrequenzunterdrückung ist daher für diese beiden Frequenzbänder nicht notwendig. Das dritte Frequenzband 106 bzw. E1 liegt in diesem Beispiel im Basisband um eine Frequenz von -13,913 MHz. Durch eine Modulation der Frequenzbänder mit beispielsweise einem Zeitmultiplexverfahren (TDMA), einem Frequenzmultiplexverfahren (FDMA) oder einem Codemultiplexverfahren (CDMA) können die Signale der verschiedenen Frequenzbänder leicht getrennt werden.

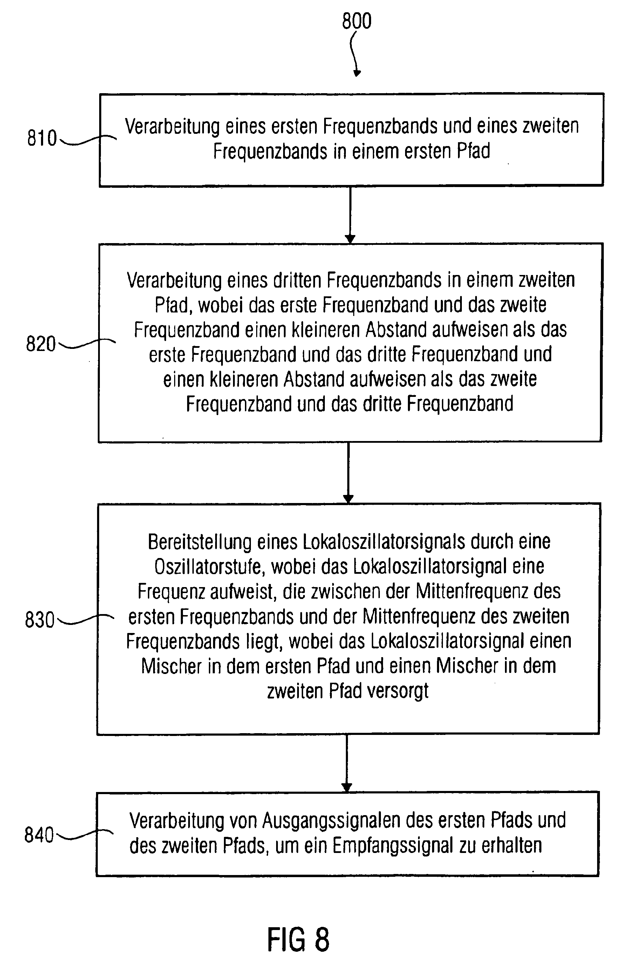

Fig. 8 zeigt ein Flussdiagramm eines Verfahrens 800 zum Empfang von Signalen mit einem Mehrfrequenzband-Empfänger entsprechend einem Ausführungsbeispiel der Erfindung. Das Verfahren 800 umfasst ein Verarbeiten 810 eines ersten Frequenzbands 102 und eines zweiten Frequenzbands 104 in einem ersten Pfad 110 und ein Verarbeiten 820 eines dritten Frequenzbands 106 in einem zweiten Pfad 120, wobei das erste Frequenzband 102 und das zweite Frequenzband 104 einen kleineren Abstand aufweisen als das erste Frequenzband 102 und das dritte Frequenzband 106 und einen kleineren Abstand aufweisen als das zweite Frequenzband 104 und das dritte Frequenzband 106. Des Weiteren umfasst das Verfahren ein Bereitstellen 830 eines Lokaloszillatorsignals 132 durch eine Oszillatorstufe 130, wobei das Lokaloszillatorsignal 132 eine Frequenz aufweist, die zwischen der Mittenfrequenz des ersten Frequenzbands 102 und der Mittenfrequenz des zweiten Frequenzbands 104 liegt, wobei das Lokaloszillatorsignal 132 einen Mischer 112 in dem ersten Pfad 110 und einen Mischer 122 in dem zweiten Pfad 120 versorgt. Anschließend kommt es zu einem Verarbeiten 840 von Ausgangssignalen 114, 124 des ersten Pfads 110 und des zweiten Pfads 120, um ein Empfangssignal 142 zu erhalten.

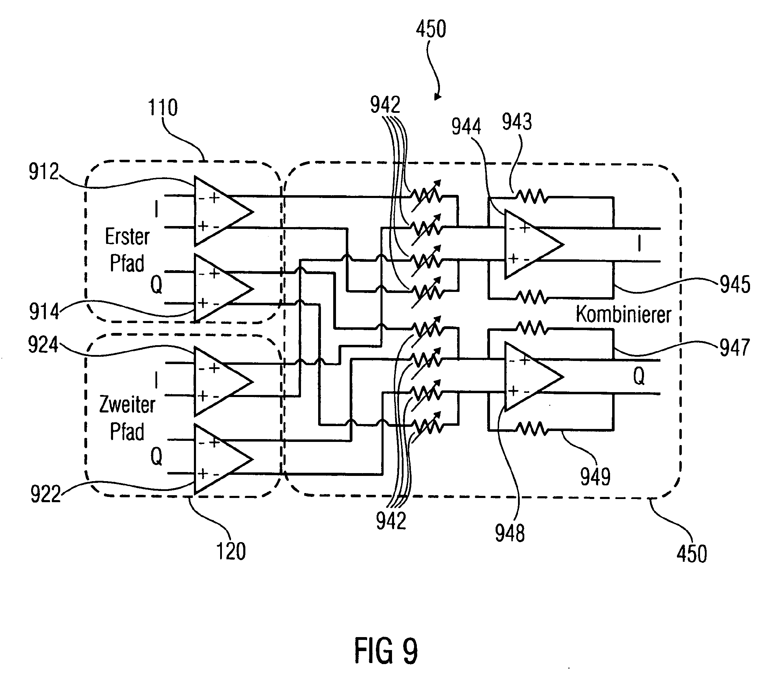

Fig. 9 zeigt ein Blockschaltbild eines Kombinierers 450 eines Mehrfrequenzband-Empfängers entsprechend einem Ausführungsbeispiel gemäß der Erfindung. Der Kombinierer 450 ist in einem differentiellen Aufbau ausgeführt. Dazu passend ist in Fig. 9 eine mögliche differenzielle Ausführung der Ausgänge des ersten Pfads 110 und des zweiten Pfads 120 dargestellt. Die Ausgänge des ersten Pfads 110 und des zweiten Pfads 120 weisen dabei jeweils für einen Inphasenzweig I und einen Quadraturphasenzweig Q einen Differenzverstärker 912, 914, 922, 924 auf. Jeder Differenzverstärker umfasst einen Ausgang für ein Signal und das invertierte Signal.

Der Kombinierer 450 umfasst eine Addiererschaltung mit einem ersten Differenzverstärker 944 und eine Addiererschaltung mit einem zweiten Differenzverstärker 948. Dabei sind der nicht invertierte Inphasen-Ausgang des ersten Pfads 110 und der nicht invertierte Inphasen-Ausgang des zweiten Pfads 120 über je einen einstellbaren Widerstand 942 mit einem ersten Eingang des ersten Differenzverstärkers 944 verbunden. Der invertierte Inphasen-Ausgang des ersten Pfads 110 und der invertierte Inphasen-Ausgang des zweiten Pfads 120 sind über je einen einstellbaren Widerstand 942 mit einem zweiten Eingang des ersten Differenzverstärkers 944 verbunden.

Des Weiteren sind der nicht invertierte Quadraturphasen-Ausgang des ersten Pfads 110 und der nicht invertierte Quadraturphasen-Ausgang des zweiten Pfads 120 über je einen einstellbaren Widerstand 942 mit einem ersten Eingang des zweiten Differenzverstärkers 948 verbunden. Der invertierte Quadraturphasen-Ausgang des ersten Pfads 110 und der invertierte Quadraturphasen-Ausgang des zweiten Pfads 120 sind über je einen einstellbaren Widerstand 942 mit einem zweiten Eingang des zweiten Differenzverstärkers 948 verbunden.

Bei dem ersten Differenzverstärker 944 und dem zweiten Differenzverstärker 948 ist jeweils der nicht invertierte Ausgang über eine resistive Rückkopplung 943, 947 mit dem invertierenden Eingang und jeweils der invertierte Ausgang über eine resistive Rückkopplung 945, 949 mit dem nicht invertierenden Eingang verbunden.

Der Kombinierer 450 ist ausgelegt, um ein überlagertes Inphasen-Ausgangssignal I und ein überlagertes Quadraturphasen-Ausgangssignal Q der Signale des ersten Pfads 110 und der Signale des zweiten Pfads 120 bereitzustellen. Allgemein ist festzuhalten, dass die Mittelfrequenz $f_0$ eines Frequenzbands als das geometrische Mittel zwischen der unteren Grenzfrequenz $f_1$ und der oberen Grenzfrequenz $f_2$ des Frequenzbands definiert ist.

$$f_0 = \sqrt{f_1 \cdot f_2}$$

Als Grenzfrequenzen werden Frequenzen bezeichnet, bei denen ein Ausgangswert einer Ausgangsgröße, wie beispielsweise eine Leistung oder eine Spannung, um 3 dB gesunken ist. Das arithmetische Mittel ist ebenfalls verwendbar.

Insbesondere wird darauf hingewiesen, dass abhängig von den Gegebenheiten, das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogrammprodukt auf einem Computer abläuft.

**Patentansprüche**

1. Mehrfrequenzband-Empfänger (100; 600) mit folgenden Merkmalen:

einem ersten Pfad (110), der ausgelegt ist, um ein erstes Frequenzband (102) und ein zweites Frequenzband (104) zu verarbeiten; einem zweiten Pfad (120), der ausgelegt ist, um ein drittes Frequenzband (106) zu verarbeiten, wobei das erste Frequenzband (102) und das zweite Frequenzband (104) einen kleineren Abstand aufweisen als das erste Frequenzband (102) und das dritte Frequenzband (106) und einen kleineren Abstand aufweisen als das zweite Frequenzband (104) und das dritte Frequenzband (106); einer Oszillatorstufe (130) zur Bereitstellung eines Lokaloszillatorsignals (132), das eine Frequenz aufweist, die zwischen der Mittenfrequenz des ersten Frequenzbands (102) und der Mittenfrequenz des zweiten Frequenzbands (104) liegt, wobei der erste Pfad (110) einen Mischer (112) aufweist, der mit dem Lokaloszillatorsignal (132) versorgbar ist, und wobei der zweite Pfad (120) einen Mischer (122) aufweist, der ebenfalls mit dem Lokaloszillatorsignal (132) versorgbar ist; einer Basisbandstufe (140) zur Verarbeitung von Ausgangssignalen (114) des ersten Pfads (110) und von Ausgangssignalen (124) des zweiten Pfads (120), um ein Empfangssignal (142) zu erhalten, wobei der erste Pfad (110) einen Inphasen-Ausgang (412) und einen Quadraturphasen-Ausgang (414) aufweist, wobei der zweite Pfad (120) einen Inphasen-Ausgang (422) und einen Quadraturphasen-Ausgang (424) aufweist, und wobei die Basisbandstufe (140) einen Inphasen-Eingang (442) und einen Quadraturphasen-Eingang (444) aufweist; und einem Kombinierer (450), der ausgelegt ist, um ein Signal an dem Inphasen-Ausgang (412) des ersten Pfads (110) und ein Signal an dem Inphasen-Ausgang (422) des zweiten Pfads (120) zu überlagern und der Basisbandstufe (140) an dem Inphasen-Eingang (442) zur Verfügung zu stellen, und wobei der Kombinierer (450) ausgelegt ist, um ein Signal an dem Quadraturphasen-Ausgang (414) des ersten Pfads (110) und ein Signal an dem Quadraturphasen-Ausgang (424) des zweiten Pfads (120) zu überlagern und der Basisbandstufe (140) an dem Quadraturphasen-Eingang (444) zur Verfügung zu stellen.

2. Mehrfrequenzband-Empfänger gemäß Anspruch 1, der ferner folgendes Merkmal aufweist:

eine Antennenstufe (200), die eine Antenne (210), einen ersten Ausgangszweig (220) und einen zweiten Ausgangszweig (230) aufweist, wobei der erste Ausgangszweig ein erstes Frequenzbandfilter (222) für einen Frequenzbereich, der das erste Frequenzband (102) und das zweite Frequenzband (104) umfasst, aufweist und der zweite Ausgangszweig (230) ein zweites Frequenzbandfilter (232) für einen Frequenzbereich, der das dritte Frequenzband (106) umfasst, aufweist, wobei das erste Frequenzband (102) und das zweite Frequenzband (104) nicht innerhalb der oberen und unteren Grenzfrequenz des zweiten Frequenzbandfilters (232) liegen, und wobei das dritte Frequenzband (106) nicht innerhalb der oberen und unteren Grenzfrequenz des ersten Frequenzbandfilters (222) liegt.

3. Mehrfrequenzband-Empfänger gemäß Anspruch 1 oder 2, bei dem die Oszillatorstufe (130) ausgelegt ist, um ein Lokaloszillatorsignal (132) bereitzustellen, das eine Frequenz aufweist, die dem arithmetischen Mittel der Mittelfrequenzen des ersten Frequenzbands (102) und der Mittelfrequenz des zweiten Frequenzbands (104), mit einer Toleranz von $\pm 10$ % des Absolutbetrags der Differenz zwischen der Mittelfrequenz des ersten Frequenzbands (102) und der Mittelfrequenz des zweiten Frequenzbands (104), entspricht.

4. Mehrfrequenzband-Empfänger gemäß einem der Ansprüche 1 bis 3, bei dem ein Signal in dem ersten Frequenzband (102) und ein Signal in dem zweiten Frequenzband (104) eine Modulation aufweisen, die so ausgelegt ist, das mehr als 50 % einer modulierten Leistung von jedem der beiden Frequenzbänder in einem Frequenzbereich liegt, der Frequenzen umfasst,- deren Absolutbetrag größer als ein Wert einer Modulationsgrenzfrequenz (330) ist, und bei dem der erste Pfad (110) ein Hochpassfilter (608) umfasst, der eine Hochpassgrenzfrequenz gleich der Modulationsgrenzfrequenz aufweist.

5. Mehrfrequenzband-Empfänger gemäß einem der Ansprüche 1 bis 4, bei dem der Mischer (112) in dem ersten Pfad (110) und der Mischer (122) in dem zweiten Pfad (120) als Inphasen-Quadraturphasen-Mischer ausgelegt sind, wobei die Oszillatorstufe (130) ausgelegt ist, um das Lokaloszillatorsignal (132) so zu liefern, dass es eine Inphasen-Komponente und eine Quadraturphasen-Komponente aufweist, die dem Inphasen-Quadraturphasen-Mischer (112) in dem ersten Pfad (110) und dem Inphasen-Quadraturphasen-Mischer (122) in dem zweiten Pfad (120) zugeführt werden kann.

6. Mehrfrequenzband-Empfänger gemäß einem der Ansprüche 1 bis 5, bei dem der zweite Pfad (120) einen weiteren Mischer aufweist, der in Signalverarbeitungsrichtung nach dem ersten Mischer (122) in dem zweiten Pfad (120) angeordnet ist, und der ausgelegt ist, um von einem zweiten Lokaloszillatorsignal versorgt zu werden, wobei die Frequenz des zweiten Lokaloszillatorsignals einen Wert aufweist, so dass die Differenz zwischen der Frequenz des zweiten Lokaloszillatorsignals und einer Zwischenfrequenz einen Wert einer Frequenz ergibt, die innerhalb eines Basisbands liegt, wobei das Basisband jenes Frequenzband umfasst, für das die Basisbandstufe ausgelegt ist, und wobei die Zwischenfrequenz einen Wert aufweist, der innerhalb der Differenz des ersten Lokaloszillatorsignals (132) und der oberen Grenzfrequenz des dritten Frequenzbands (106) und der Differenz des ersten Lokaloszillatorsignals (132) und der unteren Grenzfrequenz des dritten Frequenzbands (106) liegt.

7. Mehrfrequenzband-Empfänger gemäß einem der Ansprüche 1 bis 6, bei dem die Oszillatorstufe (130) genau einen Referenzoszillator (510) und genau einen spannungsgesteuerten Oszillator (520) aufweist, wobei der spannungsgesteuerte Oszillator (520) ausgelegt ist, um durch eine Phasenregelschleife (522) gesteuert zu werden, um ein Grundoszillatorsignal zu erzeugen, und wobei die Oszillatorstufe (130) einen Teiler (530) aufweist, der ausgelegt ist, um aus dem Grundoszillatorsignal das Lokaloszillatorsignal (132) zu erzeugen, und wobei die Oszillatorstufe (130) einen weiteren Teiler (540) aufweist, der ausgelegt ist, um aus dem Grundoszillatorsignal ein weiteres Lokaloszillatorsignal (542) zu erzeugen, wobei sich die Frequenz des weiteren Lokaloszillatorsignals (542) von der Frequenz des ersten Lokaloszillatorsignals (132) unterscheidet.

8. Mehrfrequenzband-Empfänger gemäß Anspruch 7, bei dem ein weiterer Mischer in dem zweiten Pfad (120) ausgelegt ist, um von dem weiteren Lokaloszillatorsignal (542) versorgt zu werden.

9. Mehrfrequenzband-Empfänger gemäß Anspruch 7 oder 8, bei dem die Basisbandstufe (140) einen Analog-Digital-Wandler aufweist, wobei der Analog-Digital-Wandler von einem Signal des Referenzoszillators (510) versorgbar ist.

**10.** Mehrfrequenzband-Empfänger gemäß einem der Ansprüche 1 bis 9, bei dem in einem Basisband der Absolutbetrag der Mittelfrequenz eines Frequenzbands, das das dritte Frequenzband (106) in dem Basisband darstellt, kleiner ist als der Absolutbetrag der Mittelfrequenz eines Frequenzbands, das das erste Frequenzband (102) in dem Basisband darstellt, und kleiner ist als der Absolutbetrag der Mittelfrequenz eines Frequenzbands, das das zweite Frequenzband (104) in dem Basisband darstellt.

**11.** Mehrfrequenzband-Empfänger gemäß einem der Ansprüche 1 bis 10, mit folgenden Merkmalen:

dem ersten Pfad (110), der ausgelegt ist, um das erste Frequenzband (102) zu verarbeiten, wobei das erste Frequenzband (102) eine Frequenz von 1.176,45 MHz umfasst und der ausgelegt ist, um das zweite Frequenzband (104) zu verarbeiten, wobei das zweite Frequenzband (104) eine Frequenz von 1.207,14 MHz umfasst; dem zweiten Pfad (120) der ausgelegt, um das dritte Frequenzband (106) zu verarbeiten, wobei das dritte Frequenzband (106) eine Frequenz von 1.575,42 MHz umfasst; der Oszillatorstufe (130), die das Lokaloszillatorsignal (132) mit einer Frequenz von 1.192 MHz und das weitere Lokaloszillatorsignal (542) mit einer Frequenz von 397,33 MHz sowie das Referenzoszillatorsignal mit einer Frequenz von 74,5 MHz bereitstellt, wobei die Frequenz des Lokaloszillatorsignals (132), des weiteren Lokaloszillatorsignals (542) und des Referenzoszillatorsignals eine Toleranz von 10 % aufweisen; einem Frequenzbereich in dem Basisband, der das erste Frequenzband (102) darstellt und eine Frequenz von -15,14 MHz umfasst; einem Frequenzbereich in dem Basisband, der das zweite Frequenzband (104) darstellt, und eine Frequenz von 15,55 MHz umfasst; und einem Frequenzbereich in dem Basisband, der das dritte Frequenzband (106) darstellt, und eine Frequenz von -13,91 MHz umfasst.

**12.** Mehrfreqüenzband-Empfänger gemäß einem der Ansprüche 1 bis 11, bei dem der erste Pfad (110) nur genau einen Mischer (112) zur Verarbeitung des ersten Frequenzbands (102) und des zweiten Frequenzbands (104) aufweist.

**13.** Mehrfrequenzband-Empfänger gemäß einem der Ansprüche 1 bis 12, bei dem der Kombinierer (450) einen ersten Differenzverstärker (944) zur additiven Überlagerung der Inphasen-Komponente des ersten Pfads (110) und der Inphasen-Komponente des zweiten Pfads (120) und einen zweiten Differenzverstärker (948) zur additiven Überlagerung der Quadraturphasen-Komponente des ersten Pfads (110) und der Quadraturphasen-Komponente des zweiten Pfads (120) umfasst, wobei eine Verbindung zwischen einem Ausgang des ersten Pfads (110) oder des zweiten Pfads (120) und einem Eingang eines Differenzverstärkers (944, 948) des Kombinierers (450) einen einstellbaren Widerstand (942) aufweist.

**14.** Verfahren (800) zum Empfangen von Signalen mit einem Mehrfrequenzband-Empfänger mit folgenden Schritten:

Verarbeiten (810) eines ersten Frequenzbands (102) und eines zweiten Frequenzbands (104) in einem ersten Pfad (110) ; Verarbeiten (820) eines dritten Frequenzbands (106) in einem zweiten Pfad (120), wobei das erste Frequenzband (102) und das zweite Frequenzband (104) einen kleineren Abstand aufweisen als das erste Frequenzband (102) und das dritte Frequenzband (106) und einen kleineren Abstand aufweisen als das zweite Frequenzband (104) und das dritte Frequenzband (106); Bereitstellen (830) eines Lokaloszillatorsignals (132) durch eine Oszillatorstufe (130), wobei das Lokaloszillatorsignal (132) eine Frequenz aufweist, die zwischen der Mittenfrequenz des ersten Frequenzbands (102) und der Mittenfrequenz des zweiten Frequenzbands (104) liegt, wobei das Lokaloszillatorsignal (132) einen Mischer (112) in dem ersten Pfad (110) und einen Mischer (122) in dem zweiten Pfad (120) versorgt; und Verarbeiten (840) von Ausgangssignalen des ersten Pfads (110) und von Ausgangssignalen des zweiten Pfads (120), um ein Empfangssignal (142) zu erhalten, wobei der erste Pfad (110) einen Inphasen-Ausgang (412) und einen Quadraturphasen-Ausgang (414) aufweist, wobei der zweite Pfad (120) einen Inphasen-Ausgang (422) und einen Quadraturphasen-Ausgang (424) aufweist, und wobei die Basisbandstufe (140) einen Inphasen-Eingang (442) und einen Quadraturphasen-Eingang (444) aufweist; Überlagern eines Signals an dem Inphasen-Ausgang (412) des ersten Pfads (110) und eines Signals an dem Inphasen-Ausgang (422) des zweiten Pfads (120) und der Basisbandstufe (140) an dem Inphasen-Eingang (442) zur Verfügung stellen; und Überlagern eines Signals an dem Quadraturphasen-Ausgang (414) des ersten Pfads (110) und eines Signals an dem Quadraturphasen-Ausgang (424) des zweiten Pfads (120) und der Basisbandstufe (140) an dem Quadraturphasen-Eingang (444) zur Verfügung stellen.

**15.** Computerprogramm mit einem Programmcode zur Durchführung des Verfahrens nach Anspruch 14, wenn das Computerprogramm auf einem Computer oder Mikrocontroller abläuft.

**Claims**

**1.** A multi-frequency band receiver (100; 600), comprising:

a first path (110) configured to process a first frequency band (102) and a second frequency band (104);
a second path (120) configured to process a third frequency band (106),
the first frequency band (102) and the second frequency band (104) having a smaller distance than the first frequency band (102) and the third frequency band (106), and having a smaller distance than the second frequency band (104) and the third frequency band (106);
an oscillator stage (130) for providing a local oscillator signal (132) having a frequency that is between the center frequency of the first frequency band (102) and the center frequency of the second frequency band (104), the first path (110) having a mixer (112) that may be supplied with the local oscillator signal (132), and the second path (120) having a mixer (122) that may also be supplied with the local oscillator signal (132);
a baseband stage (140) for processing output signals (114) of the first path (110) and output signals (124) of the second path (120) so as to obtain a receive signal (142),
wherein the first path (110) comprises an in-phase output (412) and a quadrature-phase output (414), wherein the second path (120) comprises an in-phase output (422) and a quadrature-phase output (424), and wherein the baseband stage (140) comprises an in-phase input (442) and a quadrature-phase input (444); and
a combiner (450) configured to superimpose a signal at the in-phase output (412) of the first path (110) and a signal at the in-phase output (422) of the second path (120) and to make said signal available to the baseband stage (140) at the in-phase input (442),
and the combiner (450) being configured to superimpose a signal at the quadrature-phase output (414) of the first path (110) and a signal at the quadrature-phase output (424) of the second path (120) and to make said signal available to the baseband stage (140) at the quadrature-phase input (444).

**2.** The multi-frequency band receiver as claimed in claim 1, further comprising:

an antenna stage (200) comprising an antenna (210), a first output branch (220) and a second output branch (230), the first output branch comprising a first frequency band filter (222) for a frequency range including the first frequency band (102) and the second frequency band (104), and the second output branch (230) comprising a second frequency band filter (232) for a frequency range including the third frequency band (106), the first frequency band (102) and the second frequency band (104) not lying within the upper and lower cutoff frequencies of the second frequency band filter (232), and the third frequency band (106) not lying within the upper and lower cutoff frequencies of the first frequency band filter (222).

**3.** The multi-frequency band receiver as claimed in claims 1 or 2, wherein the oscillator stage (130) is configured to provide a local oscillator signal (132) which has a frequency that corresponds to the arithmetic mean of the medium frequencies of the first frequency band (102) and to the medium frequency of the second frequency band (104), with a tolerance of +/- 10% of the absolute value of the difference between the medium frequency of the first frequency band (102) and the medium frequency of the second frequency band (104).

**4.** The multi-frequency band receiver as claimed in any of claims 1 to 3, wherein a signal in the first frequency band (102) and a signal in the second frequency band (104) comprise a modulation configured such that more than 50% of a modulated power of each of both frequency bands lies within a frequency range including frequencies whose absolute values are larger than a value of a modulation cutoff frequency (330), and wherein the first path (110) comprises a highpass filter (608) which has a highpass cutoff frequency that is equal to the modulation cutoff frequency.

**5.** The multi-frequency band receiver as claimed in any of claims 1 to 4, wherein the mixer (112) in the first path (110) and the mixer (122) in the second path (120) are configured as in-phase quadrature-phase mixers, the oscillator stage (130) being configured to provide the local oscillator signal (132) such that it comprises an in-phase component and a quadrature-phase component which may be fed to the in-phase quadrature-phase mixer (112) in the first path (110) and to the in-phase quadrature-phase mixer (122) in the second path (120).

**6.** The multi-frequency band receiver as claimed in any of claims 1 to 5, wherein the second path (120) comprises a further mixer which is arranged, in the signal processing direction, downstream from the first mixer (122) in the second path (120), and which is adapted to be supplied by a second local oscillator signal, the frequency of the second local oscillator signal having a value such that the difference between the frequency of the second local oscillator signal and an intermediate frequency yields a value of a frequency that is within a baseband, said baseband comprising that frequency band for which the baseband stage is adapted, and the intermediate frequency comprising a value that is within the difference between the first local oscillator signal (132) and the upper cutoff frequency of the third frequency band (106) and the difference between the first local oscillator signal (132) and the lower cutoff frequency of the third frequency band (106).

7. The multi-frequency band receiver as claimed in any of claims 1 to 6, wherein the oscillator stage (130) comprises precisely one reference oscillator (510) and precisely one voltage-controlled oscillator (520), the voltage-controlled oscillator (520) being configured to be controlled by a phase-locked loop (522) so as to generate a basic oscillator signal, and the oscillator stage (130) comprising a divider (530) configured to generate the local oscillator signal (132) from the basic oscillator signal, and the oscillator stage (130) comprising a further divider (540) configured to generate a further local oscillator signal (542) from the basic oscillator signal, the frequency of the further local oscillator signal (542) differing from the frequency of the first local oscillator signal (132).

8. The multi-frequency band receiver as claimed in claim 7, wherein a further mixer in the second path (120) is configured to be supplied by the further local oscillator signal (542).

9. The multi-frequency band receiver as claimed in claims 7 or 8, wherein the baseband stage (140) comprises an analog-to-digital converter, said analog-to-digital converter being able to be supplied by a signal of the reference oscillator (510).

10. The multi-frequency band receiver as claimed in any of claims 1 to 9, wherein in a baseband, the absolute value of the medium frequency of a frequency band representing the third frequency band (106) in the baseband is smaller than the absolute value of the medium frequency of a frequency band representing the first frequency band (102) in the baseband, and is smaller than the absolute value of the medium frequency of a frequency band representing the second frequency band (104) in the baseband.

11. The multi-frequency band receiver as claimed in any of claims 1 to 10, comprising:

the first path (110) configured to process the first frequency band (102), the first frequency band (102) comprising a frequency of 1,176.45 MHz, and configured to process the second frequency band (104), said second frequency band (104) comprising a frequency of 1,207.14 MHz;
the second path (120) configured to process the third frequency band (106), said third frequency band (106) comprising a frequency of 1,575.42 MHz;
the oscillator stage (130) providing the local oscillator signal (132) having a frequency of 1,192 MHz and the further local oscillator signal (542) having a frequency of 397.33 MHz as well as the reference oscillator signal having a frequency of 74.5 MHz, the frequency of the local oscillator signal (132), of the further local oscillator signal (542) and of the reference oscillator signal having a tolerance of 10%;
a frequency range, within the baseband, which represents the first frequency band (102) and comprises a frequency of-15.14 MHz;
a frequency range, within the baseband, which represents the second frequency band (104) and comprises a frequency of 15.55 MHz;
a frequency range, within the baseband, which represents the third frequency band (106) and comprises a frequency of -13.91 MHz.

12. The multi-frequency band receiver as claimed in any of claims 1 to 11, wherein the first path (110) comprises only precisely one mixer (112) for processing the first frequency band (102) and the second frequency band (104).

13. The multi-frequency band receiver as claimed in any of claims 1 to 12, wherein the combiner (450) comprises a first differential amplifier (944) for additively superimposing the in-phase component of the first path (110) and the in-phase component of the second path (120), and a second differential amplifier (948) for additively superimposing the quadrature-phase component of the first path (110) and the quadrature-phase component of the second path (120), a connection between an output of the first path (110) or of the second path (120) and an input of a differential amplifier (944, 948) of the combiner (450) comprising an adjustable resistor (942).

14. A method (800) of receiving signals using a multi-frequency band receiver, the method comprising:

processing (810) a first frequency band (102) and a second frequency band (104) in a first path (110);
processing (820) a third frequency band (106) in a second path (120), the first frequency band (102) and the second frequency band (104) having a smaller distance than the first frequency band (102) and the third frequency band (106), and having a smaller distance than the second frequency band (104) and the third frequency band (106);

providing (830) a local oscillator signal (132) by an oscillator stage (130), said local oscillator signal (132) comprising a frequency that lies between the center frequency of the first frequency band (102) and the center frequency of the second frequency band (104), the local oscillator signal (132) supplying a mixer (112) in the first path (110) and a mixer (122) in the second path (120); and

processing (840) output signals of the first path (110) and output signals of the second path (120) so as to obtain a receive signal (142), wherein the first path (110) comprises an in-phase output (412) and a quadrature-phase output (414), wherein the second path (120) comprises an in-phase output (422) and a quadrature-phase output (424), and wherein the baseband stage (140) comprises an in-phase input (442) and a quadrature-phase input (444);

superimposing a signal at the in-phase output (412) of the first path (110) and a signal at the in-phase output (422) of the second path (120) and making said signal available to the baseband stage (140) at the in-phase input (442); and superimposing a signal at the quadrature-phase output (414) of the first path (110) and a signal at the quadrature-phase output (424) of the second path (120) and making said signal available to the baseband stage (140) at the quadrature-phase input (444).

15. A computer program comprising a program code for performing the method as claimed in claim 14, when the computer program runs on a computer or microcontroller.

**Revendications**

1. Récepteur à bande multifréquence (100; 600), aux caractéristiques suivantes:

un premier trajet (110) qui est conçu pour traiter une première bande de fréquences (102) et une deuxième bande de fréquences (104);
un deuxième trajet (120) qui est conçu pour traiter une troisième bande de fréquences (106), la première bande de fréquences (102) et la deuxième bande de fréquences (104) présentant une distance inférieure à la première bande de fréquences (102) et la troisième bande de fréquences (106) et une distance inférieure à la deuxième bande de fréquences (104) et la troisième bande de fréquences (106);
un étage d'oscillateur (130) destiné à mettre à disposition un signal d'oscillateur local (132) présentant une fréquence qui se situe entre la fréquence centrale de la première bande de fréquences (102) et la fréquence centrale de la deuxième bande de fréquences (104), le premier trajet (110) présentant un mélangeur (112) qui peut être alimenté par le signal d'oscillateur local (132), et le deuxième trajet (120) présentant un mélangeur (122) qui peut également être alimenté par le signal d'oscillateur local (132);
un étage de bande de base (140) destiné à traiter les signaux de sortie (114) du premier trajet (110) et les signaux de sortie (124) du deuxième trajet (120), pour obtenir un signal de réception (142),
le premier trajet (110) présentant une sortie en phase (412) et une sortie de phase en quadrature (414), le deuxième trajet (120) présentant une sortie en phase (422) et une sortie de phase en quadrature (424), et l'étage de bande de base (140) présentant une sortie en phase (442) et une sortie de phase en quadrature (444); et
un combineur (450) qui est conçu pour superposer un signal à la sortie en phase (412) du premier trajet (110) et un signal à la sortie en phase (422) du deuxième trajet (120) et les mettre à disposition de l'étage de bande de base (140) à l'entrée en phase (442),
le combineur (450) étant conçu pour superposer un signal à la sortie de phase en quadrature (414) du premier trajet (110) et un signal à la sortie de phase en quadrature (424) du deuxième trajet (120) et les mettre à disposition de l'étage de bande de base (140) à l'entrée de phase en quadrature (444).

2. Récepteur à bande multifréquence selon la revendication 1, présentant par ailleurs la caractéristique suivante:

un étage d'antenne (200) qui présente une antenne (210), une première branche de sortie (220) et une deuxième branche de sortie (230), la première branche de sortie présentant un premier filtre de bande de fréquences (222) pour une plage de fréquences comportant la première bande de fréquences (102) et la deuxième fréquences (104) et la deuxième branche de sortie (230) présentant un deuxième filtre de bande de fréquences (232) pour une plage de fréquences comportant la troisième bande de fréquences (106), la première bande de fréquences (102) et la deuxième fréquences (104) ne se situant pas dans la fréquence limite supérieure et inférieure du deuxième filtre de bande de fréquences (232), et la troisième bande de fréquences (106) ne se situant pas dans les limites de la fréquence limite supérieure et inférieure du premier filtre de bande de fréquences (222).

3. Récepteur à bande multifréquence selon la revendication 1 ou 2, dans lequel l'étage d'oscillateur (130) est conçu pour mettre à disposition un signal d'oscillateur local (132) qui présente une fréquence correspondant à la moyenne arithmétique des fréquences centrales de la première bande de fréquences (102) et de la fréquence centrale de la deuxième bande de fréquences (104), avec une tolérance de ± 10 % de la quantité absolue de la différence entre la fréquence centrale de la première bande de fréquences (102) et la fréquence centrale de la deuxième bande de fréquences (104).

4. Récepteur à bande multifréquence selon l'une des revendications 1 à 3, dans lequel un signal dans la première bande de fréquences (102) et un signal dans la deuxième bande de fréquences (104) présentent une modulation qui est conçue de sorte que plus de 50 % d'une puissance modulée de chacune des deux bandes de fréquences se situent dans une bande de fréquences qui comprend les fréquences dont la quantité absolue est supérieure à une valeur d'une fréquence limite de modulation (330), et dans lequel le premier trajet (110) comporte un filtre passe-haut (608) qui présente une fréquence limite passe haut égale à la fréquence limite de modulation.

5. Récepteur à bande multifréquence selon l'une des revendications 1 à 4, dans lequel le mélangeur (112) dans le premier trajet (110) et le mélangeur (122) dans le deuxième trajet (120) sont conçus comme mélangeurs en phase - phase en quadrature, l'étage d'oscillateur (130) étant conçu pour fournir le signal d'oscillateur local (132) de sorte qu'il présente une composante en phase et une composante de phase en quadrature qui peut être alimentée vers le mélangeur en phase - de phase en quadrature (112) dans le premier trajet (110) et le mélangeur en phase - de phase en quadrature (122) dans le deuxième trajet (120).

6. Récepteur à bande multifréquence selon l'une des revendications 1 à 5, dans lequel le deuxième trajet (120) présente un autre mélangeur qui est disposé, dans le sens du traitement de signal, après le premier mélangeur (122) dans le deuxième trajet (120), et qui est conçu pour être alimenté par un deuxième signal d'oscillateur local, la fréquence du deuxième signal d'oscillateur local présentant une valeur telle que la différence entre la fréquence du deuxième signal d'oscillateur local et une fréquence intermédiaire donne une valeur d'une fréquence qui se situe dans une bande de base, la bande de base comprenant la bande de fréquences pour laquelle est conçu l'étage de bande de base, et la fréquence intermédiaire présentant une valeur qui se situe dans les limites de la différence entre le premier signal d'oscillateur local (132) et la fréquence limite supérieure de la troisième bande de fréquences (106) et la différence entre le premier signal d'oscillateur local (132) et la fréquence limite inférieure de la troisième bande de fréquences (106).

7. Récepteur à bande multifréquence selon l'une des revendications 1 à 6, dans lequel l'étage d'oscillateur (130) présente exactement un oscillateur de référence (510) et exactement un oscillateur commandé par la tension (520), l'oscillateur commandé par la tension (520) étant conçu pour être commandé par une boucle de réglage de phase (522), pour générer un signal d'oscillateur de base, et l'étage d'oscillateur (130) présentant un diviseur (530) qui est conçu pour générer, à partir du signal d'oscillateur de base, le signal d'oscillateur local (132), et l'étage d'oscillateur (130) présentant un autre diviseur (540) qui est conçu pour générer, à partir du signal d'oscillateur de base, un autre signal d'oscillateur local (542), la fréquence de l'autre signal d'oscillateur local (542) différant de la fréquence du premier signal d'oscillateur local (132).

8. Récepteur à bande multifréquence selon la revendication 1, dans lequel un autre mélangeur dans le deuxième trajet (120) est conçu pour être alimenté par l'autre signal d'oscillateur local (542).

9. Récepteur à bande multifréquence selon la revendication 7 ou 8, dans lequel l'étage de bande de base (140) présente un convertisseur analogique-numérique, le convertisseur analogique-numérique pouvant être alimenté par un signal de l'oscillateur de référence (510).

10. Récepteur à bande multifréquence selon l'une des revendications

1 à 9, dans lequel, dans une bande de base, la quantité absolue de la fréquence centrale d'une bande de fréquences qui représente la troisième bande de fréquences (106) dans la bande de base est inférieure à la quantité absolue de la fréquence centrale d'une bande de fréquences qui représente la première bande de fréquences (102) dans la bande de base, et est inférieure à la quantité absolue de la fréquence centrale d'une bande de fréquences qui représente la deuxième bande de fréquences (104) dans la bande de base.

11. Récepteur à bande multifréquence selon l'une des revendications 1 à 10, aux caractéristiques suivantes:

le premier trajet (110), qui est conçu pour traiter la première bande de fréquences (102), la première bande de fréquences (102) comprenant une fréquence de 1.176,45 MHz, et qui est conçu pour traiter la deuxième bande de fréquences (104), la deuxième bande de fréquences (104) comprenant une fréquence de 1.207,14 MHz; le deuxième trajet (120), qui est conçu pour traiter la troisième bande de fréquences (106), la troisième bande de fréquences (106) comprenant une fréquence de 1.575,42 MHz; l'étage d'oscillateur (130), qui met à disposition le signal oscillateur local (132) avec une fréquence de 1.192 MHz et l'autre signal oscillateur local (542) avec une fréquence de 397,33 MHz ainsi que le signal oscillateur de référence avec une fréquence de 74,5 MHz, la fréquence du signal oscillateur local (132), de l'autre signal oscillateur local (542) et du signal oscillateur de référence présentant une tolérance de 10 %; une plage de références dans la bande de base, qui représente la première bande de fréquences (102) et comprend une fréquence de -15,14 MHz; une plage de références dans la bande de base, qui représente la deuxième bande de fréquences (104) et comprend une fréquence de 15,55 MHz; et une plage de références dans la bande de base, qui représente la troisième bande de fréquences (106) et comprend une fréquence de -13,91 MHz.

**12.** Récepteur à bande multifréquence selon l'une des revendications 1 à 11, dans lequel le premier trajet (110) ne présente qu'exactement un mélangeur (112) pour le traitement de la première bande de fréquences (102) et de la deuxième bande de fréquences (104).

**13.** Récepteur à bande multifréquence selon l'une des revendications 1 à 12, dans lequel le combineur (450) comporte un premier amplificateur de différence (944) pour la superposition additive de la composante en phase du premier trajet (110) et de la composante en phase du deuxième trajet (120) et un deuxième amplificateur de différence (948) pour la superposition additive de la composante de phase en quadrature du premier trajet (110) et de la composante de phase en quadrature du deuxième trajet (120), une connexion entre une sortie du premier trajet (110) ou du deuxième trajet (120) et une entrée d'un amplificateur de différence (944, 948) du combineur (450) présentant une résistance réglable (942).

**14.** Procédé (800) pour recevoir des signaux par un récepteur à bande multifréquence, aux étapes suivantes consistant à:

traiter (810) une première bande de fréquences (102) et une deuxième bande de fréquences (104) dans un premier trajet (110); traiter une troisième bande de fréquences (106) dans un deuxième trajet (120), la première bande de fréquences (102) et la deuxième bande de fréquences (104) présentant une distance inférieure à la première bande de fréquences (102) et la troisième bande de fréquences (106) et une distance inférieure à la deuxième bande de fréquences (104) et la troisième bande de fréquences (106); mettre à disposition (830) un signal d'oscillateur local (132) par un étage d'oscillateur (130), le signal d'oscillateur local (132) présentant une fréquence qui se situe entre la fréquence centrale de la première bande de fréquences (102) et la fréquence centrale de la deuxième bande de fréquences (104), le signal d'oscillateur local (132) alimentant un mélangeur (112) dans le premier trajet (110) et un mélangeur (122) dans le deuxième trajet (120); et traiter (840) les signaux de sortie (114) du premier trajet (110) et les signaux de sortie (124) du deuxième trajet (120), pour obtenir un signal de réception (142), le premier trajet (110) présentant une sortie en phase (412) et une sortie de phase en quadrature (414), le deuxième trajet (120) présentant une sortie en phase (422) et une sortie de phase en quadrature (424), et l'étage de bande de base (140) présentant une sortie en phase (442) et une sortie de phase en quadrature (444); et superposer un signal à la sortie en phase (412) du premier trajet (110) et un signal à la sortie en phase (422) du deuxième trajet (120) et les mettre à disposition de l'étage de bande de base (140) à l'entrée en phase (442), superposer un signal à la sortie de phase en quadrature (414) du premier trajet (110) et un signal à la sortie de phase en quadrature (424) du deuxième trajet (120) et les mettre à disposition de l'étage de bande de base (140) à l'entrée de phase en quadrature (444).

**15.** Programme d'ordinateur avec un code de programme pour réaliser le procédé selon la revendication 14 lorsque le programme d'ordinateur est exécuté sur un ordinateur ou un microcontrôleur.

FIG 1

200

ANTENNENSTUFE

222

220

210

230

232

FIG 2

FIG 3

FIG 4

BASISBANDSTUFE — 140

450 — 400

414 — 444 — 442

412 — 424 — 422

110 — ERSTER PFAD

120 — ZWEITER PFAD

130

OSZILLATORSTUFE

510

132

542

530

540

520

522

FIG 5

| FIG 6 | |
|---|---|
| FIG 6A | FIG 6B |

600

110

E5 Pfad
NULL-IF

112

606

LNA

E5
1162-1222 MHz
B_3dB=60 MHz

222

HF Pfad

210

KANAL
Filter E5

ANTENNE
LNA

220

602

KANAL
Filter E1

120

232

E1 Pfad
NIEDER -IF

122

230

LNA

E1
1568-1582 MHz
B_3dB=14 MHz

604

200

130

132

Frequenz
Synthesizer

F_LO_E5/E1 =
1192 MHz

0°
90°

640

/2

530

Fosc=
74.5 MHz

PUFFER

634

636

520

Osc

PD

CP

LF

VCO

74.5 MHz

628

629

F_VCO =
2384 MHz

/16

/2

510

626

522

630

632

FIG 6A

22

600

110

AMP
DC-Block
Q-IF_E5 = 0 Hz

F_LO_E5 = 1192 MHz
618
608

AMP
I-IF_E5 = 0 Hz

AMP
DC-Block

Basisband
ANTI-SPIEGELUNG
~ 30 MHz
614
F_ABTASTEN = F_OSC = 74.5 MHz
VGA
PUFFER
Q
ADC

612
616
624

620

AMP
AMP
Q-IF2_E1 = 13.913 MHz

F_LO1_E1 = 1192 MHz
IF1_E1 = 383,42 MHz
610
622

AMP
AMP
I-IF2_E1 = 13.913 MHz

~ 30 MHz
ANTI-SPIEGELUNG
614
F_ABTASTEN = F_OSC = 74.5 MHz

120

140

132
542

/3
/2
0°
90°
F_LO2_L1 = 397.333 MHz

130

540
638
642

626

FIG 6

| FIG 6 | |
|---|---|
| FIG 6A | FIG 6B |

FIG 6B

FIG 7

800

| | |
|---|---|
| 810 | Verarbeitung eines ersten Frequenzbands und eines zweiten Frequenzbands in einem ersten Pfad |

| | |
|---|---|
| 820 | Verarbeitung eines dritten Frequenzbands in einem zweiten Pfad, wobei das erste Frequenzband und das zweite Frequenzband einen kleineren Abstand aufweisen als das erste Frequenzband und das dritte Frequenzband und einen kleineren Abstand aufweisen als das zweite Frequenzband und das dritte Frequenzband |

| | |
|---|---|
| 830 | Bereitstellung eines Lokaloszillatorsignals durch eine Oszillatorstufe, wobei das Lokaloszillatorsignal eine Frequenz aufweist, die zwischen der Mittenfrequenz des ersten Frequenzbands und der Mittenfrequenz des zweiten Frequenzbands liegt, wobei das Lokaloszillatorsignal einen Mischer in dem ersten Pfad und einen Mischer in dem zweiten Pfad versorgt |

| | |
|---|---|
| 840 | Verarbeitung von Ausgangssignalen des ersten Pfads und des zweiten Pfads, um ein Empfangssignal zu erhalten |

FIG 8

FIG 9

EP 2 286 259 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070096980 A1
- CA 2542702 A1
- WO 2006038050 A1
- US 6038248 A
- WO 2008000383 A1
- WO 0139364 A1
- DE 102006029482 A1
- WO 2006085255 A1

**In der Beschreibung aufgeführte Nicht-Patentliteratur**

- **L. MARRADI et al.** The Galileo Ground Segment Reference Receiver Development: Architecture and Critical Design Issues. *ION GPS/GNSS 2003,* 12. September 2003, 1929-1940
- **D. AKOS et al.** A Prototyping Platform for Multi-Frequency GNSS Receivers. *ION GPS/GNSS 2003,* 12. September 2003, 117-128